(19) Europäisches Patentamt
European Patent Office
Office européen des brevets

(11) **EP 2 980 386 A1**

(12) **EUROPEAN PATENT APPLICATION**
published in accordance with Art. 153(4) EPC

(43) Date of publication:
03.02.2016 Bulletin 2016/05

(51) Int Cl.:
*F02D 29/00* (2006.01)          *F16D 25/12* (2006.01)
*F16H 59/14* (2006.01)          *F16H 61/04* (2006.01)
*F16H 63/50* (2006.01)

(21) Application number: 14772734.1

(22) Date of filing: 13.03.2014

(86) International application number:
PCT/JP2014/056777

(87) International publication number:
WO 2014/156702 (02.10.2014 Gazette 2014/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 27.03.2013 JP 2013067381

(71) Applicant: Aisin Seiki Kabushiki Kaisha
Kariya-shi Aichi 448-8650 (JP)

(72) Inventor: TAMARU Daisuke
Kariya-shi
Aichi 448-8650 (JP)

(74) Representative: Kramer Barske Schmidtchen
Patentanwälte PartG mbB
European Patent Attorneys
Landsberger Strasse 300
80687 München (DE)

(54) **VEHICLE DRIVE DEVICE**

(57)     A vehicle drive device which can reduce occurrence of shock associated with engagement of a clutch after speed change at a vehicle provided with a manual transmission and the clutch is provided. The device includes a speed change target engine torque calculation portion, in a case where the clutch (3) is not in a completely-engaged state, calculating a target engine torque (Tet) at a speed change at the manual transmission (4) on the basis of a clutch torque (Tc) obtained by a clutch torque obtaining portion (54) and on the basis of a rotation speed of an input shaft (41) after completion of the speed change, and an engine control portion (10) controlling an engine (2) to achieve the target engine torque (Tet) in a case where the clutch (3) is not completely engaged.

FIG. 1

EP 2 980 386 A1

**Description**

TECHNICAL FIELD

The present invention relates to a vehicle drive device provided with a manual clutch and driving a vehicle.

BACKGROUND ART

At a vehicle (which will be hereinafter appropriately abbreviated as "an MT vehicle") provided with a manual transmission (which will be hereinafter appropriately abbreviated as "MT") and a manual clutch (which will be hereinafter abbreviated as "a clutch"), a driver returns an accelerator pedal and reduces a rotation speed of an engine at an up-shift speed change (from the second speed stage to the third speed stage, for example). Then, the driver presses down a clutch pedal and disengages the clutch with a view not to apply load to the MT at the speed change, and thereafter the driver operates a shift lever and performs the shift-up speed change with the MT. Thereafter, the driver gradually returns the clutch pedal and allows the clutch to engage.
Thus, the driver needs to perform a complicated series of operations including pressing down the clutch pedal while returning the accelerator pedal, then operating the shift lever and gradually releasing the clutch pedal again. Because of difficulties of the series of operations, driving of the MT vehicle is generally difficult and some drivers avoid MT vehicles.
In addition, in a case where a timing of returning the accelerator pedal is delayed when the clutch is disengaged during the up-shift speed change or in a case where a return amount of the accelerator pedal is not enough, the rotation speed of the engine increases rapidly, and noise occurs and fuel efficiency decreases. In order to avoid this, the driver needs to consider operation timing and an operation amount of the accelerator pedal and the clutch pedal at the speed change, and thus driving of the MT vehicle was difficult.
On the other hand, in a case where the driver performs a down-shift speed change (from the third speed stage to the second speed stage, for example), a rotation speed of an input shaft of the MT increases compared to the rotation speed of the engine. In a case where the driver engages the clutch without considering a difference of the rotation speeds between the engine and the input shaft, shock occurs at the speed change. Thus, to prevent the shock from occurring at the speed change, the driver in some circumstances performs an operation technique of increasing the engine rotation speed to the rotation speed of the input shaft after the speed change, including, heel-and-toe, for example. The operation of the heel-and-toe, however, requires the driver to have a high degree of skill and it is difficult for ordinary drivers to perform the heel-and-toe.
From among these, to solve the problem related to the down-shift speed change, Patent document 1 discloses a technique of controlling the engine to an engine rotation speed which is best for a speed stage after the speed change at the vehicle provided with the MT and the clutch. In addition, a technique disclosed in Patent document 2 is detecting a target gear position by the down-shift speed change operation of the driver at an earlier timing than a timing at which an actual gear position is established, and controlling the engine to an input shaft rotation speed determined in response to a change gear ratio of the target gear position and the vehicle speed in a case where the clutch is pressed down further than a predetermined operation amount.

DOCUMENT OF PRIOR ART

PATENT DOCUMENT

Patent Document 1: JPS58-200052A
Patent Document 2: JP491357B

OVERVIEW OF INVENTION

PROBLEM TO BE SOLVED BY INVENTION

In the inventions described in Patent document 1 and/or Patent document 2, the rotation speed of the engine is feedback-controlled to an appropriate rotation speed, however, the above-stated feedback control starts after completion of a clutch disengagement operation. Thus, there is a problem that the engine rotation speed comes out of an appropriate speed due to, for example, delayed response of the engine, and thus the shock occurs to the vehicle at clutch engagement.
In addition, in the inventions described in Patent document 1 and/or Patent document 2, after completion of the speed change and after the clutch engagement is started by the driver, the feedback control is ended and thus the engine rotation speed is not controlled. Accordingly, there is a problem that, in a case where the driver operates the accelerator pedal and the clutch pedal at wrong operation timings and/or by wrong operation amounts after the clutch engagement is started, there is a problem that the engine rotation speed rapidly increases, and thus the noise occurs and the fuel efficiency decreases or the shock is generated by a large difference in the rotation speeds after the engagement.
In addition, in the inventions described in Patent document 1 and/or Patent document 2, once the feedback control of the rotation speed is ended, an engine output target is returned to a value that is in accordance with accelerator operation of the driver. Thereafter, for example, in a case the driver presses down the accelerator pedal again, the delay in the response occurs due to that the engine output that has once decreased and due to an intake air inertia coming into a combustion chamber of an internal combustion engine, and therefore the vehicle speed does not increase as intended by the driver.

In addition, in the inventions described in Patent document 1 and/or Patent document 2, the adjustment of the engine rotation speed is conducted only in a direction which increases the engine rotation speed. That is, in a case where the driver presses down the accelerator more than needed and as a result the engine rotation speed has excessively increased, the effects of the Patent document 1 and Patent document 2 are not expected. When performing the up-shift speed change in driving the MT vehicle, the driver needs to return the accelerator once and to wait until the engine rotation speed to drop to the rotation speed which corresponds to the post-speed change rotation speed regardless of how much the driver has the intention of acceleration, which makes the driving of the MT vehicle difficult.

The present invention is made in view of such circumstances and a purpose of the present invention is to provide a vehicle drive device which can reduce occurrence of shock associated with engagement of a clutch after speed change at a vehicle provided with a manual transmission and the clutch.

MEANS FOR SOLVING PROBLEM

The invention of the vehicle drive device related to claim 1 which is made to solve the above-stated problems includes an engine outputting an engine torque to a drive shaft and driving drive wheels, an engine operation portion operating the engine torque so that the engine torque is variable, a required engine torque detection portion detecting an operation amount of the engine operation portion and detecting a required engine torque, a manual transmission provided between the drive shaft and the drive wheels, and including an input shaft to which a drive force from the engine is inputted and an output shaft rotatably connected to the drive wheels, the manual transmission including plural speed stages each of which including a different change gear ratio obtained by dividing a rotation speed of the input shaft by a rotation speed of the output shaft, a clutch provided between the drive shaft and the input shaft, and making a clutch torque between the drive shaft and the input shaft variable, a clutch operation portion operating the clutch torque so that the clutch torque is variable, a clutch torque obtaining portion obtaining the clutch torque generated by the clutch, a speed change target engine torque calculation portion, in a case where the clutch is not in a completely-engaged state, calculating a target engine torque at a speed change at the manual transmission on the basis of the clutch torque obtained by the clutch torque obtaining portion, and an engine control portion controlling the engine to achieve the target engine torque in a case where the clutch is not completely engaged and controlling the engine to achieve the required engine torque in a case where the clutch is completely engaged.

The invention related to claim 2, at the invention described in claim 1, includes a target engine rotation speed calculation portion calculating a target engine rotation speed making a rotation speed of the engine close to the rotation speed of the input shaft after the speed change, and an engine rotation speed adjustment torque calculation portion calculating an engine rotation speed adjustment torque making the rotation speed of the engine close to the rotation speed of the input shaft on the basis of the target engine rotation speed, wherein the speed change target engine torque calculation portion calculates the target engine torque in a manner that the engine rotation speed adjustment torque is one of calculation factors. It is preferable that the engine rotation speed adjustment torque calculation portion calculates the engine rotation speed adjustment torque on the basis of a difference rotation speed between the target engine rotation speed and the current engine rotation speed.

According to the invention related to claim 3, at the invention described in claim 2, the target engine rotation speed calculation portion calculates the target engine rotation speed on the basis of the rotation speed of the input shaft which is the rotation speed of the input shaft after completion of the speed change at the manual transmission.

According to the invention related to claim 4, at the invention described in claim 3, in a case where the speed change at the manual transmission corresponds to a down-shift speed change, the target engine rotation speed calculation portion adds a first specified rotation speed to the rotation speed of the input shaft which is the rotation speed of the input shaft after the completion of the speed change, to calculate the target engine rotation speed.

According to the invention related to claim 5, at the invention described in claim 4, in a case where the engine rotation speed reaches the target engine rotation speed, the target engine rotation speed calculation portion calculates the target engine rotation speed changing from a rotation speed obtained by adding the first specified rotation speed to the rotation speed of the input shaft which is the rotation speed of the input shaft after the completion of the speed change, to the rotation speed of the input shaft which is the rotation speed of the input shaft after the completion of the speed change.

According to the invention related to claim 6, at the invention described in claim 5, the target engine rotation speed calculation portion calculates the target engine rotation speed such that the greater the required engine torque is or the higher a speed stage after the down-shift speed change is, in the shorter time the target engine rotation speed transitions to the rotation speed of the input shaft which is the rotation speed of the input shaft after the completion of the speed change.

According to the invention related to claim 7, at the invention described in any one of claims 3 to 6, in a case where the speed change at the manual transmission corresponds to an up-shift speed change, the target engine rotation speed calculation portion calculates the target engine rotation speed changing from a rotation speed obtained by adding a second specified rotation speed to the rotation speed of the input shaft which is the rotation speed of the input shaft after the completion of the speed change to a rotation speed obtained by subtracting a third specified rotation speed from the rotation speed of the input shaft which is the rotation speed of the input shaft after the completion of the speed change.

According to the invention related to claim 8, at the invention described in claim 7, the target engine rotation speed calculation portion calculates the target engine rotation speed such that the greater the required engine torque is or the higher a speed stage after the down-shift speed change is, in the shorter time the target engine rotation speed changes to the rotation speed obtained by subtracting the third specified rotation speed from the rotation speed of the input shaft which is the rotation speed of the input shaft after the completion of the speed change.

The invention related to claim 9, at the invention described in any one of claims 1 to 8, includes a load obtaining portion obtaining a load working on the engine, and a maintaining torque calculation portion calculating, on the basis of the load, a maintaining torque corresponding to a torque necessary to maintain the engine rotation speed, wherein the speed change target engine torque calculation portion calculates the target engine torque in a manner that the maintaining torque is one of calculation factors.

The invention related to claim 10, at the invention described in any one of claims 1 to 9, includes a return control engine torque calculation portion calculating a return control engine torque changing from the target engine torque to the required engine torque in a case where a difference rotation speed between the engine and the input shaft becomes 0 after the speed change is executed, wherein the engine control portion controls the engine to achieve the return control engine torque.

The invention related to claim 11, at the invention described in any one of claims 1 to 10, includes an acceleration intention detection portion detecting an intention of acceleration of a driver, wherein the speed change target engine torque calculation portion calculates the target engine torque and the engine control portion controls the engine to achieve the target engine torque only in a case where the acceleration intention detection portion detects the intention of acceleration of the driver.

According to the invention related to claim 12, at the invention described in claim 11, the acceleration intention detection portion corresponds to the required engine torque detection portion.

The invention related to claim 13, at the invention described in either claim 11 or 12, includes a brake device applying a braking force to the vehicle, and a braking force generation detection portion detecting generation of the braking force at the brake device, wherein the acceleration intention detection portion corresponds to the braking force generation detection portion.

The invention related to claim 14, at the invention described in any one of claims 1 to 13, the clutch torque obtaining portion corresponds to a clutch operation amount detection portion detecting an operation amount of the clutch operation portion.

The invention related to claim 15, at the invention described in any one of claims 1 to 14, includes a vehicle speed detection portion detecting a vehicle speed of the vehicle, wherein the speed change target engine torque calculation portion calculates the target engine torque and the engine control portion controls the engine to achieve the target engine torque in a case where the vehicle speed detected at the vehicle speed detection portion is faster than a specified speed.

According to the invention related to claim 16, at the invention described in any one of claims 3 to 15, in a case where the clutch is not completely engaged and the rotation speed of the engine before the execution of the speed change is equal to or less than a first specified rotation speed, the target engine rotation speed calculation portion predicts a down-shift speed change and calculates the target engine rotation speed on the basis of the rotation speed of the input shaft which is the rotation speed of the input shaft in a case where the speed change is executed to be the predicted speed stage. In a case where the clutch is not in the completely engaged and the rotation speed of the engine before the execution of the speed change is equal to or more than a second specified rotation speed, the target engine rotation speed calculation portion predicts an up-shift speed change and calculates the target engine rotation speed on the basis of the rotation speed of the input shaft which corresponds to the rotation speed of the input shaft in a case where the speed change is executed to be the predicted speed stage.

ADVANTAGEOUS EFFECT OF INVENTION

According to the invention related to claim 1, in a case where the clutch is not in the completely-engaged state, the speed change target engine torque calculation portion calculates the target engine torque at the speed change at the manual transmission on the basis of the clutch torque. Then, the engine control portion controls the engine to achieve the target engine torque in a case where the clutch is not completely engaged.

Accordingly, in a case where the speed change is performed after the clutch is disengaged, and then the clutch is gradually engaged, the engine is controlled to the target engine torque calculated on the basis of the clutch torque. Thus, in a case where the clutch torque fluctuates due to operation of the clutch pedal by the driver, the target engine torque fluctuates in response to the fluctuation of the clutch torque, thereby reducing generation of shock at a time of the engagement of the clutch after the speed change.

That is, after the speed change, in a case where the driver releases the clutch pedal and thus the clutch torque increases, the target engine torque also increases. Therefore, without depending on the operation of the accelerator by the driver, a decrease in the vehicle speed at the engagement of the clutch can be automatically restricted from occurring and the shock at the engagement of the clutch can be restricted from occurring. In addition, in a case where the driver presses down the accelerator pedal and the clutch pedal, the target engine torque associated with the fluctuation of the clutch torque also decreases in association with the decrease in the clutch torque. Accordingly, the rotation speed of the engine is prevented from increasing and the occurrence of the shock at the clutch engagement can be restricted.

According to the invention related to claim 2, the target engine rotation speed calculation portion calculates the target engine rotation speed which makes the rotation speed of the engine close to the rotation speed of the input shaft after the speed change. The engine rotation speed adjustment torque calculation portion calculates the engine rotation speed adjustment torque which makes the rotation speed of the engine close to the rotation speed of the input shaft on the basis of the target engine rotation speed. Further, the speed change target engine torque calculation portion calculates the target engine torque in a manner that the engine rotation speed adjustment torque is one of the calculation factors.

Accordingly, synchronization of the rotation speeds of the engine and the input shaft with each other is facilitated after the speed change, and the shock related to the engagement of the clutch can be even more restricted from occurring.

According to the invention related to claim 3, the target engine rotation speed calculation portion calculates the target engine rotation speed on the basis of the rotation speed of the input shaft which is the rotation speed of the input shaft after the speed change is completed at the manual transmission.

Accordingly, the target engine rotation speed for making, after the speed change, the engine rotation speed close to the input shaft rotation speed is calculated appropriately.

According to the invention related to claim 4, in a case where the speed change at the manual transmission is the down-shift speed change, the target engine rotation speed calculation portion adds the first specified rotation speed to the rotation speed of the input shaft, which is the rotation speed of the input shaft after the completion of the speed change, to calculate the target engine rotation speed. Accordingly, at the time of clutch engagement after the down-shift speed change with the intention of acceleration of the driver, the decrease of the vehicle speed which attributes to that the engine rotation speed is lower than the input shaft rotation speed can be prevented from occurring, and the shock can be more prevented from occurring.

According to the invention related to claim 5, in a case where the engine rotation speed reaches the target engine rotation speed, the target engine rotation speed calculation portion calculates the target engine rotation speed which changes from the rotation speed obtained by adding the first specified rotation speed to the rotation speed of the input shaft which is the rotation speed of the input shaft after the completion of the speed change, to the rotation speed of the input shaft which is the rotation speed of the input shaft after the completion of the speed change.

Accordingly, the quick synchronization of the rotation speed of the engine and the rotation speed of the input shaft can be facilitated, and the shock can be even more restricted from occurring.

According to the invention related to claim 6, the target engine rotation speed calculation portion calculates the target engine rotation speed such that the greater the required engine torque is or the higher the speed stage after the down-shift speed change is, in the shorter time the target engine rotation speed changes to the rotation speed of the input shaft which is the rotation speed of the input shaft after the completion of the speed change.

Accordingly, the greater an acceleration requirement by the driver is and the greater the required engine torque is, in the shorter time the rotation speeds of the engine and the input shaft synchronize with each other. Consequently, the clutch can be engaged completely in a shorter time and the vehicle can be accelerated again quickly according to the intention of the driver. Further, in this case, the shock after the speed change is relatively large because the rotation speeds are synchronized in the short time, however, the generation of the shock after the speed change is not a problem to the driver because the acceleration requirement of the driver and the required engine torque are originally large in this case. An advantage of the quick reacceleration can be obtained.

In addition, in a case where the speed stage after the speed change is high, a change gear ratio is small. Thus, even though the engine rotation speed is reduced quickly, fluctuation of the drive force applied to the drive wheels is smaller and the shock at the engagement of the clutch is smaller compared to a case where the speed stage after the speed change is low. Consequently, the clutch can be completely engaged in a shorter time while the shock at the engagement of the clutch is restrained from occurring, and the vehicle can be accelerated again promptly in response to the intention of the driver.

According to the invention related to claim 7, in a case where the speed change at the manual transmission is the up-shift speed change, the target engine rotation speed calculation portion calculates the target engine rotation speed which changes gradually from the rotation speed obtained by adding the second specified rotation speed to the rotation speed of the input shaft which is the rotation speed of the input shaft after the completion of the speed change, to the rotation speed obtained by subtracting the third specified rotation speed from the rotation speed of the input shaft which is the rotation speed of the input shaft after the completion of the speed change.

Accordingly, immediately after the completion of the up-shift speed change, the engine is controlled to achieve the target engine rotation speed obtained by adding the second specified rotation speed to the input shaft rotation speed, and thus the rotation speed of the engine is prevented from decreasing rapidly. Consequently, the shock is prevented from occurring due to a rapid decrease of the rotation speed of the engine at the time of engagement of the clutch.

In addition, after the speed change, the engine is controlled to the target engine rotation speed that gradually changes to the rotation speed derived by subtracting the third specified rotation speed from the rotation speed of the input shaft which is the rotation speed of the input shaft after completion of the speed change. Thus, the synchronization of the rotation speeds of the engine and the input shaft with each other is facilitated, and the shock at the time of engagement of the clutch which results from the difference rotation speed between the engine and the input shaft can be even more restricted from occurring. In addition, because the synchronization of the rotation speeds of the engine and the input shaft is facilitated, the synchronization of the rotation speeds of the engine and the input shaft is completed in a shorter time, and therefore the clutch can be completely engaged in a shorter time.

According to the invention related to claim 8, the target engine rotation speed calculation portion calculates the target engine rotation speed such that the greater the required engine torque is or the higher the speed stage after the down-shift speed change is, in the shorter time the target engine rotation speed changes to the rotation speed derived by subtracting the third specified rotation speed from the rotation speed of the input shaft which is the rotation speed of the input shaft after the completion of the speed change.

Accordingly, the greater the required engine torque is, the more the synchronization of the rotation speeds of the engine and the input shaft with each other is facilitated, and in the shorter time the synchronization of the rotation speeds of the engine and the input shaft with each other can be completed. Therefore, the clutch can be completely engaged in a shorter time and the vehicle can be accelerated again quickly according to the intention of the driver.

According to the invention related to claim 9, the load obtaining portion obtains the load working on the engine. Then, the maintaining torque calculation portion calculates, on the basis of the load, the maintaining torque that corresponds to the torque needed to maintain the engine rotation speed. The speed change target engine torque calculation portion calculates the target engine torque in a manner that the maintaining torque is one of the calculation factors.

Accordingly, for instance, in a case where the load of the engine fluctuates depending on, for example, presence or absence of operation of auxiliary machine driven by the engine, the target engine torque added with the maintaining torque based on the load is calculated. Therefore, in a case where the clutch is not in the completely-engaged state at the speed change, increase and/or decrease of the engine rotation speed which is associated with the fluctuation of the load of the engine is prevented from occurring, and the shock can be prevented from occurring at the engagement of the clutch.

In addition, in a case where the speed stage after the up-shift speed change is high, the change gear ratio is small. Thus, even though the engine rotation speed is reduced quickly, the fluctuation of the drive force applied to the drive wheels is smaller and the shock at the engagement of the clutch is smaller compared to a case where the speed stage after the up-shift speed change is low. Consequently, the clutch can be completely engaged in a shorter time while the shock at the engagement of the clutch is restrained from occurring, and the vehicle can be accelerated again promptly according to the intention of the driver.

According to the invention related to claim 10, the return control engine torque calculation portion calculates the return control engine torque which changes from the target engine torque to the required engine torque in a case where the difference rotation speed between the engine and the input shaft becomes 0 after the speed change is executed. Then, the engine control portion controls the engine to achieve the return control engine torque.

Accordingly, after the speed change is completed and the clutch is synchronized, the required engine torque that is gradually in accordance with the intention of acceleration of the driver is gradually returned. Consequently, fluctuation of the engine torque applied to the vehicle is alleviated and a sense of discomfort of the driver can be avoided.

According to the invention related to claim 11, the acceleration intention detection portion detecting the intention of acceleration of the driver is included. Only in a case where the acceleration intention detection portion detects the intention of acceleration by the driver, the speed change target engine torque calculation portion calculates the target engine torque and the engine control portion controls the engine to achieve the target engine torque.

Accordingly, in a case where the driver does not have the intention of acceleration, the engine is not controlled by the target engine torque calculated on the basis of the clutch torque, thereby preventing the driver from feeling the sense of discomfort.

According to the invention related to claim 12, the intention of acceleration of the driver is detected on the basis of the operation amount detected by the required engine torque detection portion. Accordingly, on the basis of an operation amount of the engine operation portion by the driver, it is determined whether or not the engine is controlled to achieve the target engine torque. For example, in a case where the driver is operating the engine operation portion before the speed change and/or during the speed change, it is determined that the driver has the intention of acceleration. In a case where the driver is not operating the engine operation portion at all before the speed change, it is determined that the driver does not have the intention of acceleration. As described above, by detecting the intention of acceleration of the driver appropriately, it can be prevented that an engine control against the intention of the driver is started and it can be prevented that the driver feels the sense of discomfort.

According to the invention related to claim 13, the intention of acceleration of the driver is detected by the braking force generation detection portion detecting the generation of the braking force at the brake device. Accordingly, in a case where the driver operates the brake operation portion before the speed change and/or during the speed change, it is determined that the driver does not have the intention of acceleration and the driver has an intention of deceleration, the engine is not controlled by the target engine torque calculated on the basis of the clutch torque, and engine braking can be generated at the engine. Consequently, the vehicle can be decelerated according to the intention of deceleration of the driver and also it is prevented that the driver feels the sense of discomfort.

According to the invention related to claim 14, the clutch torque obtaining portion is the clutch operation amount detection portion detecting the operation amount of the clutch operation portion. Accordingly, the operation amount of the clutch operation portion can be obtained with a simple configuration.

According to the invention related to claim 15, in a case where the vehicle speed is faster than the specified speed, the speed change target engine torque calculation portion calculates the target engine torque and the engine control portion controls the engine so that the target engine torque is achieved.

Accordingly, at the start of the vehicle where the vehicle speed is lower than the specified speed, in a case where the clutch is brought to engage, the engine is not controlled to be the target engine torque. Consequently, it can be prevented that the driver feels the sense of discomfort due to that the engine is controlled against the intention of the driver at the start of the vehicle. In addition, engine stall which attributes to that the engine is controlled according to the target engine torque which is lower than the required engine torque can be prevented from occurring.

According to the invention related to claim 16, in a case where the clutch is not completely engaged and the rotation speed of the engine before the execution of the speed change is equal to or less than the first specified rotation speed or is equal to or more than the second specified rotation speed, the target engine rotation speed calculation portion predicts the speed stage and calculates the target engine rotation speed on the basis of the input shaft rotation speed which is the input shaft rotation speed in a case where the speed change is performed to be the predicted speed stage.

In a state where the engine rotation speed is equal to or less than the first specified rotation speed, at which the engine rotation speed is close to an idling rotation speed, it is considered that the driver does not perform the up-shift speed change and that the driver performs the down-shift speed change. Thus, the control is executed so that the intention of the down-shift speed change of the driver is recognized and the engine rotation speed is increased before the driver actually performs the down-shift speed change. Accordingly, the increase of the engine rotation speed can be more quickly made to follow the increase of the input shaft rotation speed which is associated with the down-shift speed change, and the difference rotation speed between the engine rotation speed and the input shaft rotation speed can be reduced more quickly, and thus the occurrence of the shock associated with the engagement of the clutch can be reduced.

In addition, in a state where the engine rotation speed is equal to or more than the second specified rotation speed, at which the engine rotation speed is close to a rev limit rotation speed, it is considered that the driver does not perform the down-shift speed change and that the driver performs the up-shift speed change. Thus, the control is executed so that the intention of the up-shift speed change of the driver is recognized and the engine rotation speed is reduced before the driver actually performs the up-shift speed change. Accordingly, the reduction of the engine rotation speed can be more quickly made to follow the decrease of the input shaft rotation speed which is associated with the up-shift speed change, and the difference rotation speed between the engine rotation speed and the input shaft rotation speed can be reduced more quickly, and thus the occurrence of the shock associated with the clutch engagement can be reduced.

BRIEF DESCRIPTION OF DRAWINGS

[Fig. 1] is a structural view illustrating a configuration of a vehicle drive device of the present embodiment.
[Fig. 2] is "clutch torque mapping data" representing a relationship between a clutch stroke and a clutch torque.
[Fig. 3] is a skeleton diagram of a manual transmission.
[Fig. 4] is a cross-sectional view of a selection mechanism in an axial direction.
[Fig. 5] is a time chart representing a relationship between time elapsed, and an input shaft rotation speed Ni, an engine rotation speed Ner, a target engine rotation speed Net, a clutch torque Tc, an engine torque Te and an engine torque Te based on an accelerator opening degree Ac, in a case where a down-shift speed change is performed.

[Fig. 6] is a time chart representing a relationship between the time elapsed, and the input shaft rotation speed Ni, the engine rotation speed Ner, the target engine rotation speed Net, the clutch torque Tc, the engine torque Te and the engine torque Te based on the accelerator opening degree Ac, in a case where an up-shift speed change is performed.

[Fig. 7] is a flowchart of "clutch/engine cooperative control".

[Fig. 8] is a flowchart of "torque-down control".

[Fig. 9] is a flowchart of "engine rotation speed control".

[Fig. 10] is a flowchart of "return control".

[Fig. 11] is a flowchart of "maintaining torque calculation process".

[Fig. 12] is a view representing "compressor auxiliary machine torque calculation data", which is an example of a mapping data representing a relationship between the engine rotation speed Ner and a compressor auxiliary machine torque Tac.

[Fig. 13] is a view representing an example of "calculation data of return rate per unit time" which is a mapping data representing a relationship between a deviation torque ∆T and a return rate Rr per unit time.

[Fig. 14] is a view representing "target engine deceleration calculation data" which is an example of a mapping data representing a relationship between an accelerator opening degree and a speed stage, and a target engine deceleration.

[Fig. 15] is a view representing "engine rotation speed adjustment torque calculation data" which is an example of a mapping data representing a relationship between a difference rotation speed between the target engine rotation speed and a current engine rotation speed, and the engine rotation speed adjustment torque.

[Fig. 16] is a time chart representing a relationship between the time elapsed, and the input shaft rotation speed Ni, the engine rotation speed Ner, the target engine rotation speed Net, the clutch torque Tc, the engine torque Te and the engine torque Te based on the accelerator opening degree Ac, in a case where the up-shift speed change is performed.

MODE FOR CARRYING OUT THE INVENTION

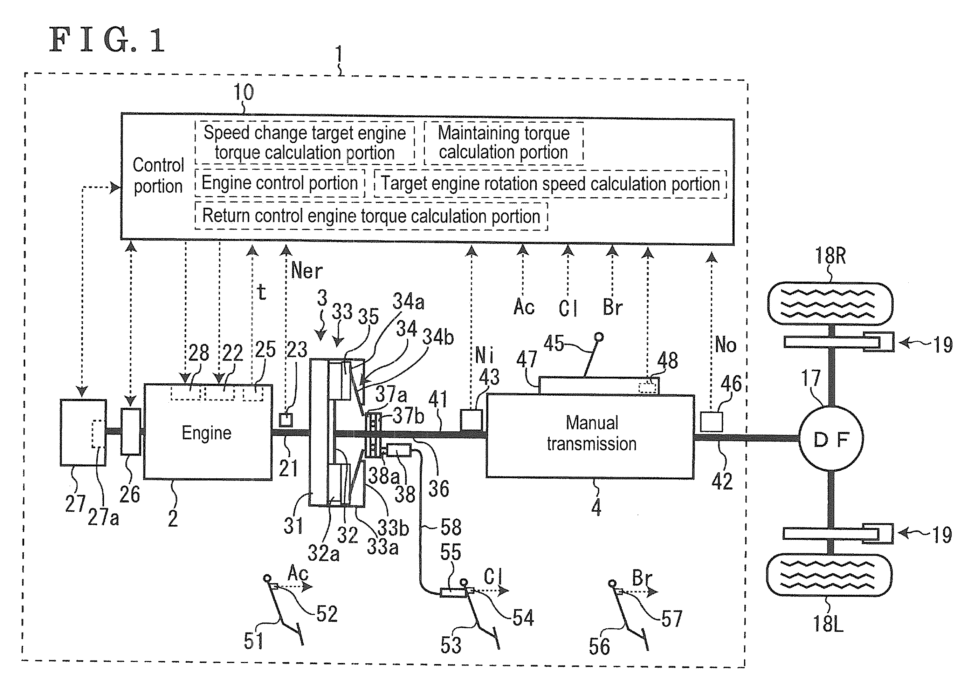

(Explanation of vehicle) A vehicle drive device 1 according an embodiment of the present invention will be described with reference to Fig. 1. Fig. 1 shows an overview of the vehicle drive device 1 of a vehicle provided with an engine 2. In Fig. 1, the bold lines indicate mechanical connection between the devices and the arrows by broken lines indicate signal lines for controlling.

As illustrated in Fig. 1, the engine 2, a clutch 3, a manual transmission 4 and a differential apparatus 17 are provided on the vehicle in series with each other in this order of arrangement. Drive wheels 18R, 18L of the vehicle are connected to the differential apparatus 17. The drive wheels 18R, 18L indicate either front, rear or front/rear wheels of the vehicle.

The vehicle includes an accelerator pedal 51, a clutch pedal 53 and a brake pedal 56. The accelerator pedal 51 operates an engine torque Te outputted by the engine 2 in such a manner that the engine torque Te is variable. The accelerator pedal 51 is provided with an acceleration sensor 52 which detects an accelerator opening degree Ac which corresponds to an operation amount of the accelerator pedal 51.

The clutch pedal 53 is for causing the clutch 3 to be in a disconnected state or in a connected state, and for causing a clutch torque Tc which will be described below to be variable. The vehicle includes a master cylinder 55 which generates a fluid pressure corresponding to an operation amount of the clutch pedal 53. The master cylinder 55 is provided with a clutch sensor 54 which detects a stroke of the master cylinder 55, that is, the operation amount of the clutch pedal 53.

The brake pedal 56 is provided with a brake sensor 57 which detects an operation amount of the brake pedal 56. The vehicle includes a brake master cylinder (not shown) which generates a fluid pressure corresponding to the operation amount of the brake pedal 56 and a brake device 19 which applies a braking force to the wheels according to a master pressure generated by the brake master cylinder.

The engine 2 is, for example, a gasoline engine or a diesel engine which uses hydrocarbon based fuel including, for example, gasoline or light oil. The engine 2 includes a drive shaft 21, a throttle valve 22, an engine rotation speed sensor 23 and a fuel injection apparatus 28. The drive shaft 21 rotates unitary with a crank shaft which is rotatably driven by a piston. Thus, the engine 2 outputs the engine torque Te to the drive shaft 21, and drives the drive wheels 18R, 18L. In a case where the engine 2 is the gasoline engine, an ignition apparatus (not shown) for igniting an air-fuel mixture gas in the cylinder is provided at a cylinder head of the engine 2.

The throttle valve 22 is provided in a pathway through which air is taken into the cylinder of the engine 2. The throttle valve 22 is for adjusting an amount of the air (an amount of the air-fuel mixture gas) taken into the cylinder of the engine 2. The fuel injection apparatus 28 is provided at a pathway through which the air is taken inside the engine 2 or at the cylinder head of the engine 2. The fuel injection apparatus 28 is an apparatus which injects the fuel including, for example, the gasoline or the light oil.

The engine rotation speed sensor 23 is provided in the vicinity of the drive shaft 21. The engine rotation speed sensor 23 detects an engine rotation speed Ner which corresponds to a rotation speed of the drive shaft 21 and outputs the detected signal to a control portion 10. An oil temperature sensor 25 detects an oil temperature t of engine oil lubricating the engine 2 and outputs a detection signal thereof to the control portion 10. In the present embodiment, the drive shaft 21 of the engine 2 is connected to a flywheel 31 which is an input member of the clutch 3 which will be described below.

The drive shaft 21 of the engine 2, or a shaft or a gear rotated in association with the drive shaft 21 is connected to a generator 26 and a compressor 27a of an air conditioner 27. The generator 26 generates electric power necessary for the vehicle.

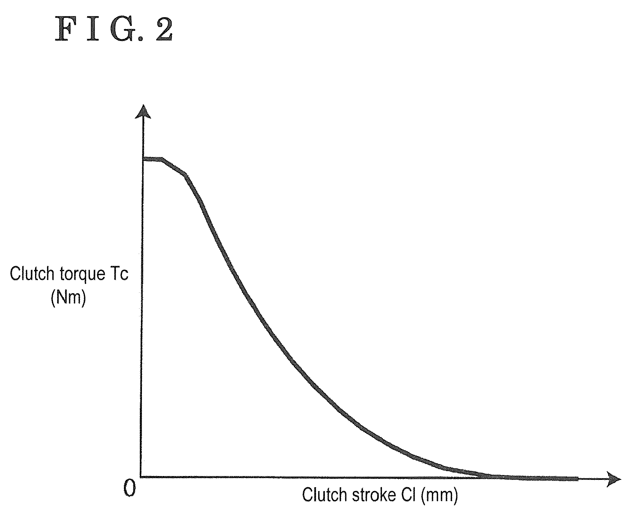

The clutch 3 is provided between the drive shaft 21 of the engine 2 and an input shaft 41 of the manual transmission 4 which will be described below. The clutch 3 is a manually-operated type clutch which connects or disconnects the drive shaft 21 and the input shaft 41 with each other by the operation of the clutch pedal 53 by a driver, and causing the clutch torque Tc (shown in Fig. 2) between the drive shaft 21 and the input shaft 41 to be variable. The clutch 3 includes the flywheel 31, a clutch disc 32, a clutch cover 33, a diaphragm spring 34, a pressure plate 35, a clutch shaft 36, a release bearing 37 and a slave cylinder 38.

The flywheel 31 is formed in a disc plate shape and is connected to the drive shaft 21. The clutch shaft 36 is connected to the input shaft 41. The clutch disc 32 is formed in a disc plate shape and is provided with a friction material 32a at outer peripheral surfaces of both sides of the clutch disc 32. The clutch disc 32 faces the flywheel 31, and is in spline-fitted with a tip end of the clutch shaft 36 to be movable in an axial direction and not to be rotatable relative to the clutch shaft 36.

The clutch cover 33 is formed by a cylindrical portion 33a formed in a flattened cylindrical shape and a plate portion 33b extending in a rotation center direction from one end of the cylindrical portion 33a. The other end of the cylindrical portion 33a is connected to the flywheel 31. Therefore, the clutch cover 33 rotates integrally with the flywheel 31. The pressure plate 35 includes a disc shape having a hole at a center thereof. At a side opposite to the flywheel 31, the pressure plate 35 is provided to face the clutch disc 32 and to be movable in the axial direction. The clutch shaft 36 is inserted into the pressure plate 35 at the center thereof.

The diaphragm spring 34 is formed by a ring portion 34a of a ring shape and plural plate spring portions 34b extending inwardly from an inner peripheral edge of the ring portion 34a. The plate spring portions 34b are gradually inclined towards an inner direction to be positioned at a side of the plate portion 33b. The plate spring portions 34b are elastically deformable in the axial direction. The diaphragm spring 34 is disposed between the pressure plate 35 and the plate portion 33b of the clutch cover 33 in a state where the plate spring portions 34b are compressed in the axial direction. The ring portion 34a is in contact with the pressure plate 35. An intermediate portion of the plate spring portion 34b is connected to an inner peripheral edge of the plate portion 33b. The clutch shaft 36 is inserted into a center of the diaphragm spring 34.

The release bearing 37 is attached to a housing, which is not shown, of the clutch 3. The clutch shaft 36 is inserted into a center of the release bearing 37 to be movable in the axial direction. The release bearing is constituted by a first member 37a and a second member 37b which oppose each other and are rotatable relative to each other. The first member 37a is in contact with a tip end of the plate portion 33b.

The slave cylinder 38 includes a push rod 38a which advances and retreats due to the fluid pressure. A tip end of the push rod 38a is in contact with the second member 37b of the release bearing 37. The slave cylinder 38 and the master cylinder 55 are connected with each other with a fluid pressure pipe 58.

In a state where the clutch pedal 53 is not depressed, fluid pressure is generated at neither the master cylinder 55 nor the slave cylinder 38. In this state, via the pressure plate 35, the clutch disc 32 is biased by the diaphragm spring 34 towards the flywheel 31 and is pushed against the flywheel 31. Accordingly, the flywheel 31 and the clutch disc 32, the pressure plate 35, the drive shaft 21 and the input shaft 41 are in a connected state in which all rotate integrally with one another at the same rotation speed due to a friction force of the friction material 32a and the flywheel 31 and a friction force of the friction material 32a and the pressure plate 35.

On the other hand, when the clutch pedal 53 is depressed, the fluid pressure is generated in the master cylinder 55 and the fluid pressure is also generated in the slave cylinder 38. Thus, the push rod 38a of the salve cylinder 38 pushes the release bearing 37 towards the diaphragm spring 34. Then, the plate spring portions 34b are deformed while a connecting portion of the plate spring portions 34b with the inner peripheral edge of the plate portion 33b serving as a fulcrum point, and the biasing force biasing the clutch disc 32 towards the flywheel 31 becomes weak and finally becomes 0.

As shown in Fig. 2, as a clutch stroke which corresponds to the stroke of the master cylinder 55 increases, the clutch torque Tc which is transmitted by the clutch 3 from the drive shaft 21 to the input shaft 41 decreases. When the above-described biasing force becomes 0, the clutch torque Tc becomes 0 and the clutch 3 comes to be in a completely-disconnected state. In this case, the rotation speed of the drive shaft 21 and a rotation speed of the drive shaft 21 do not match each other, and the drive shaft 21 and the input shaft 41 are in a state of rotating independently. Thus, as described above, the clutch 3 according to the present embodiment is a normally closed type clutch, in which the clutch 3 is in a connected state when the clutch pedal 53 is not depressed down. The driver, by pressing down the clutch pedal 53, makes the clutch torque Tc to be 0 and establishes a state where the engine torque Te is not transmitted to the input shaft 41, and operates a shift lever 45 to perform the speed change at the manual transmission 4. In addition, the driver can be prepared for the start by pressing down the clutch pedal 53.

The manual transmission 4 is provided between the drive shaft 21, and the drive wheels 18R, 18L. The manual transmission 4 includes the input shaft 41 and an output shaft 42. The input shaft 41 is connected to the clutch shaft 36 that is an output member of the clutch 3 and a drive force from the engine 2 is inputted to the input shaft 41. The output shaft 42 is rotatably connected to the drive wheels 18R, 18L. The manual transmission 4 is a stepped stage transmission that selectively switches plural speed stages each including a different change gear ratio that is obtained by dividing an input shaft rotation speed Ni by an output shaft rotation speed No, between the transmission input shaft 41 and the output shaft 42.

The manual transmission 4 is provided with a shift operation mechanism 47 converting the operation of the shift lever 45 by the driver into a force operating a selection mechanism. The configuration of the manual transmission 4 will be described in detail below.

An input shaft rotation speed sensor 43 which detects the rotation speed of the input shaft 41 (the input shaft rotation speed Ni) is provided in the vicinity of the input shaft 41. The input shaft rotation speed Ni (a clutch rotation speed Nc) detected by the input shaft rotation speed sensor 43 is outputted to the control portion 10.

An output shaft rotation speed sensor 46 which detects a rotation speed of the output shaft 42 (an output shaft rotation speed No) is provided in the vicinity of the output shaft 42. The output shaft rotation speed No detected by the output shaft rotation speed sensor 46 is outputted to the control portion 10.

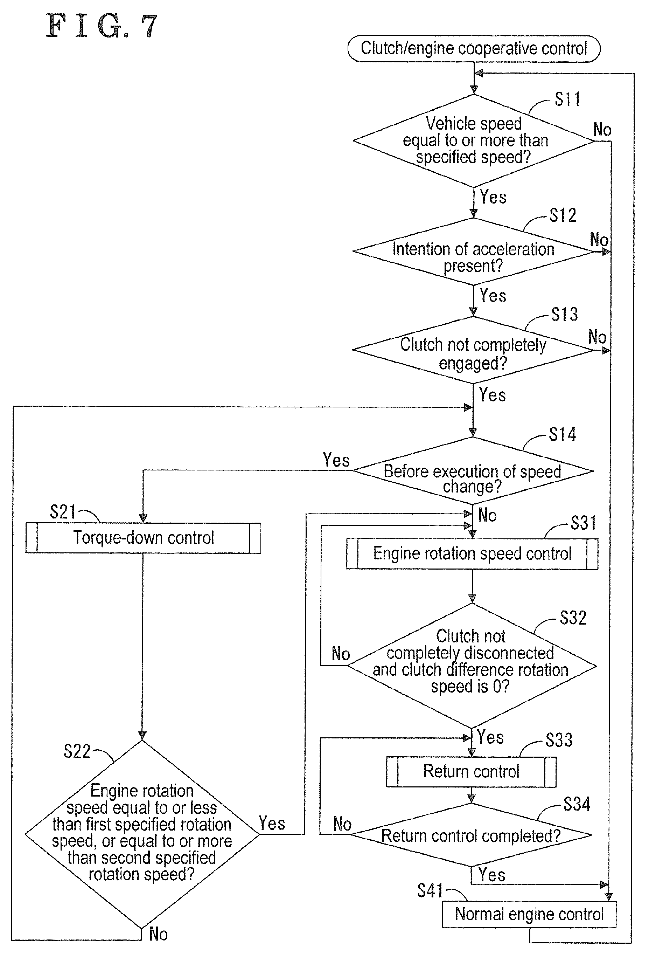

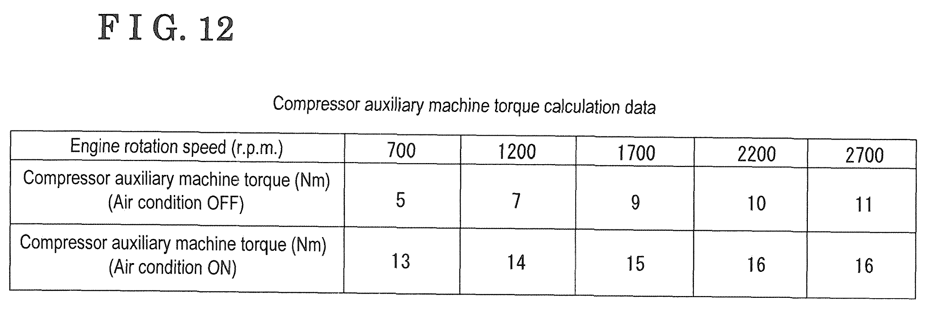

The control portion 10 integrally controls the vehicle. The control portion 10 includes a storage portion configured by, for example, CPU, RAM, ROM and/or a nonvolatile memory (which are not shown). The CPU executes programs corresponding to the flowcharts shown in Fig. 7 to Fig. 11. The RAM temporarily stores variables necessary for executing the programs. The storage portion stores the above-described programs and/or the mapping data shown in Fig. 12 to Fig. 15.

On the basis of the accelerator opening degree Ac of the acceleration sensor 52 according to the operation of the accelerator pedal 51 by the driver, the control portion 10 calculates a required engine torque Ter which corresponds to torque of the engine 2 which is required by the driver. Then, on the basis of the required engine torque Ter, the control portion 10 adjusts an opening degree S of the throttle valve 22 and adjusts an amount of intake air, and the control portion 10 adjusts a fuel injection amount of the fuel injection apparatus 28 and controls the ignition apparatus.

Thus, a supply amount of the air-fuel mixture gas including the fuel is adjusted and the engine torque Te outputted by the engine 2 is adjusted to be the required engine torque Ter, and the engine rotation speed Ner is adjusted. In a case where the accelerator pedal 51 is not depressed (accelerator opening degree Ac = 0), the engine rotation speed Ner is maintained at an idling rotation speed (for example, 700 r.p.m.).

By referring a clutch stroke Cl detected by the clutch sensor 54 to "clutch torque mapping data" shown in Fig. 2 and representing a relationship between the clutch stroke Cl and the clutch torque Tc, the control portion 10 calculates the clutch torque Tc that corresponds to the torque which the clutch 3 can transmit from the drive shaft 21 to the input shaft 41. "A clutch torque obtaining portion" described in the scope of claims is configured by the control portion 10, the clutch sensor 54 and "the clutch torque mapping data".

The control portion 10 calculates a vehicle speed V on the basis of the output shaft rotation speed No detected by the output shaft rotation speed sensor 46. The control portion 10 calculates a clutch difference rotation speed Δc which corresponds to a difference rotation speed of the clutch 3 by subtracting the input shaft rotation speed Ni detected by the input shaft rotation speed sensor 43 from the engine rotation speed Ner detected by the engine rotation speed sensor 23. In other words, the clutch difference rotation speed Δc is the difference rotation speed of the clutch 3, that is, a difference rotation speed between the drive shaft 21 and the input shaft 41.

The configuration including the engine 2, the clutch 3, the manual transmission 4, the control portion 10, the clutch pedal 53, the clutch sensor 54, the master cylinder 55, the accelerator pedal 51, the acceleration sensor 52, the brake pedal 56, the brake sensor 57 and the fluid pressure pipe 58 corresponds to the vehicle drive device 1 of the present embodiment.

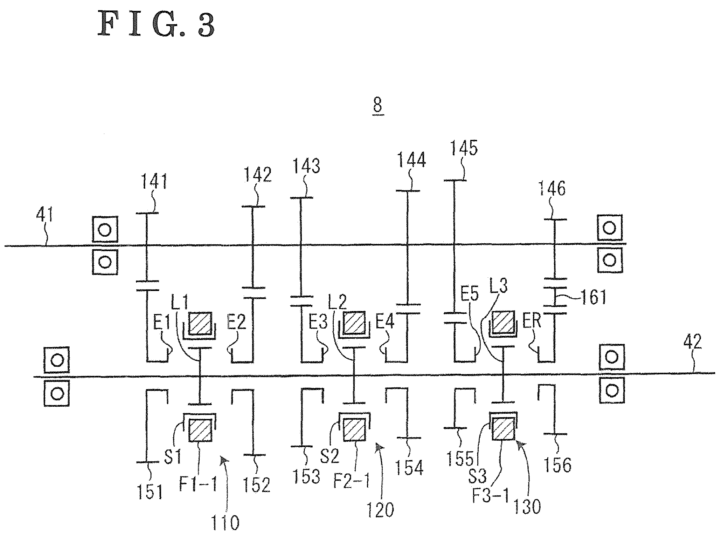

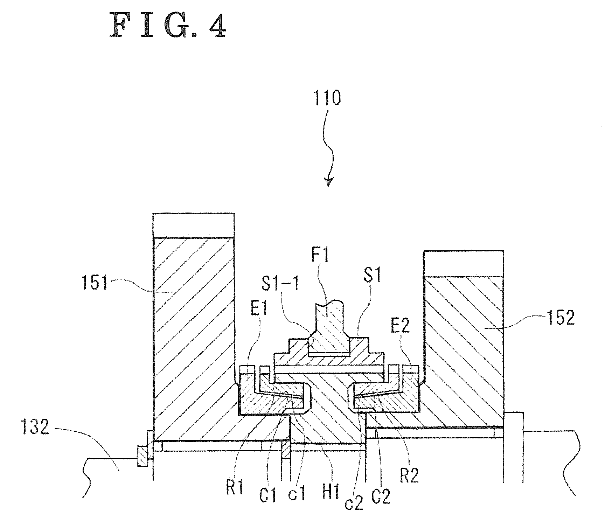

(Manual transmission 4) The manual transmission 4 will be described with reference to Fig. 3 and Fig. 4. The manual transmission 4 includes the input shaft 41, the output shaft 42, a first drive gear 141, a second drive gear 142, a third drive gear 143, a fourth drive gear 144, a fifth drive gear 145, a reverse drive gear 146, a first driven gear 151, a second driven gear 152, a third driven gear 153, a fourth driven gear 154, a fifth driven gear 155, a reverse driven gear 156, an output gear 157, a reverse idler gear 161, a first selection mechanism 110, a second selection mechanism 120 and a third selection mechanism 130.

The input shaft 41 and the output shaft 42 are supported at a housing (not shown) of the manual transmission 4 to be rotatable and to be parallel.

The first drive gear 141, the second drive gear 142, the third drive gear 143, the fourth drive gear 144, the fifth drive gear 145 and the reverse drive gear 146 are fixed gears provided at the input shaft 41 not to be rotatable relative to the input shaft 41.

The first driven gear 151, the second driven gear 152, the third driven gear 153, the fourth driven gear 154, the fifth driven gear 155, the reverse driven gear 156 and the output gear 157 are idler gears provided at the output shaft 42 in an idly rotatable (relatively rotatable) manner or in an engageable manner.

The first drive gear 141 and the first driven gear 151 engage with each other to form the first speed stage. The second drive gear 142 and the second driven gear 152 engage with each other to form the second speed stage. The third drive gear 143 and the third driven gear 153 engage with each other to form the third speed stage. The fourth drive gear 144 and the fourth driven gear 154 engage with each other to form the fourth speed stage. The fifth drive gear 145 and the fifth driven gear 155 engage with each other to form the fifth speed stage.

Gear diameters of the first drive gear 141, the second drive gear 142, the third drive gear 143, the fourth drive gear 144 and the fifth drive gear 145 increase in the mentioned order. Gear diameters of the first driven gear 151, the second driven gear 152, the third driven gear 153, the fourth driven gear 154 and the fifth driven gear 155 decrease in the mentioned order.

The reverse idler gear 161 is arranged between the reverse drive gear 146 and the reverse driven gear 156, and engages with the reverse drive gear 146 and the reverse driven gear 156. The reverse idler gear 161, the reverse drive gear 146 and the reverse driven gear 156 are gears for reversing.

(Selection mechanisms) [First selection mechanism] The first selection mechanism 110 selects the first driven gear 151 or the second driven gear 152, and connects the selected gear to the output shaft 42 not to be rotatable relative to the output shaft 42. The first selection mechanism 110 is configured by a first clutch hub H1, a first speed engagement member E1, a second speed engagement member E2, a first synchronizer ring R1, a second synchronizer ring R2 and a first sleeve S1 as shown in Fig. 3 and/or Fig. 4.

The first clutch hub H1 is spline-fitted to the output shaft 42 between the first driven gear 151 and the second driven gear 152 in an axial direction. Thus, the first clutch hub H1 is not rotatable relative to the output shaft 42 and is movable in the axial direction of the shaft. The first speed engagement member E1 and the second speed engagement member E2 are fixed to the first driven gear 151 and the second driven gear 152, respectively, by press fitting, for example.

The first synchronizer ring R1 is provided between the first clutch hub H1 and the first speed engagement member E1. The first synchronizer ring R1 is adapted to be spline-fitted in the first sleeve S1 or disengaged from the first sleeve S1 by a movement of the first sleeve S1 in the axial direction. The first synchronizer ring R1 and the first speed engagement member E1 are respectively provided with cone surfaces $c_1$ and $C_1$ which are conic surfaces being in contact with each other. The first sleeve S1 is spline-engaged with an outer circumference of the first clutch hub H1 to be movable in the axial direction.

The second synchronizer ring R2 is provided between the first clutch hub H1 and the second speed engagement member E2. The second speed engagement member E2 and the second synchronizer ring R2 are respectively provided with cone surfaces $c_2$ and $C_2$ which are conic surfaces being in contact with each other. The second sleeve S2 is spline-engaged with an outer circumference of the second clutch hub H2 to be movable in the axial direction.

The first selection mechanism 110 configures a known synchromesh mechanism which can establish a state where one of the first driven gear 151 and the second driven gear 152 engages with the output shaft 42 while the one of the first driven gear 151 and the second driven gear 152 synchronize with the output shaft 42, and both the first driven gear 151 and the second driven gear 152 disengage relative to the output shaft 42.

In "a neutral position" illustrated in Fig. 3, the first sleeve S1 of the first selection mechanism 110 engages with neither the first speed engagement member E1 nor the second speed engagement member E2. A first engagement groove S1-1 including an annular shape is formed at an outer circumference of the first sleeve S1. A first shift fork F1 engages with the first engagement groove S1-1.

In a case where the first sleeve S1 is shifted by the first shift fork F1 towards the first driven gear 151, the first sleeve S1 comes to be spline-engaged with the first synchronizer ring R1 and the first synchronizer ring R1 is moved towards the first speed engagement member E1 by the first sleeve S1. Then, the cone surface $c_1$ of the first synchronizer ring R1 comes to be in contact with the cone surface $C_1$ of the first speed engagement member E1, and the rotation speeds of the output shaft 42 and the first driven gear 151 are gradually synchronized with each other by a friction force between the cone surfaces $c_1$ and $C_1$.

In a case where the rotation speeds of the output shaft 42 and the first driven gear 151 are synchronized with each other, the first sleeve S1 further moves towards the first speed engagement member E1 and engages with an outer tooth spline of an outer circumference of the first speed engagement member E1, and connects the first driven gear 151 to the output shaft 42 not to be relatively rotatable, thereby establishing the first speed stage.

In addition, in a case where the first sleeve S1 is shifted by the first shift fork F1 towards the second driven gear 152, the second synchronizer ring R2 synchronizes the rotations of the output shaft 42 and the second driven gear 152 with each other in a similar manner, and thereafter connects both of these not to be relatively rotatable, thereby establishing the second speed stage.

[Second selection mechanism] The second selection mechanism 120 selects the third drive gear 143 or the fourth drive gear 144, and connects the selected gear to the output shaft 42 not to be rotatable relative to the output shaft 42. The second selection mechanism 120 is configured by a second clutch hub H2, a third speed engagement member E3, a fourth speed engagement member E4, a third synchronizer ring R3, a fourth synchronizer ring R4 and a second sleeve S2.

The second selection mechanism 120 is a synchromesh mechanism that is similar to the first selection mechanism 110 and is different only in that the second clutch hub H2 is fixed to the output shaft 42 between the third drive gear 143 and the fourth drive gear 144, and the third speed engagement member E3 and the fourth speed engagement member E4 are fixed to the third drive gear 143 and the fourth drive gear 144, respectively. In "the neutral position", the second selection mechanism 120 engages with neither the engagement members E3 nor E4. A second engagement groove S2-1 including an annular shape is formed at an outer circumference of the second sleeve S2. A second shift fork F2 engages with the second engagement groove S2-1.

In a case where the second sleeve S2 is shifted by the second shift fork F2 towards the third drive gear 143, the rotations of the output shaft 42 and the third drive gear 143 are synchronized with each other, and thereafter both of these are integrally connected with each other to establish the third speed stage. In addition, in a case where the second sleeve S2 is shifted by the second shift fork F2 towards the fourth drive gear 144, the rotations of the output shaft 42 and the fourth drive gear 144 are synchronized with each other, and thereafter both of these are directly connected with each other to establish the fourth speed stage.

[Third selection mechanism] The third selection mechanism 130 selects the fifth drive gear 145 or the reverse drive gear 146, and connects the selected gear to the output shaft 42 not to be rotatable relative to the output shaft 42. The third selection mechanism 130 is configured by a third clutch hub H3, a fifth speed engagement member E5, a reverse engagement member ER, a fifth synchronizer ring R5, a reverse synchronizer ring RR and a third sleeve S3.

The third selection mechanism 130 is a synchromesh mechanism that is similar to the first selection mechanism 110 and is different only in that the third clutch hub H3 is fixed to the output shaft 42 between the fifth drive gear 145 and the reverse drive gear 146, and the fifth speed engagement member E5 and the reverse engagement member RR are fixed to the fourth drive gear 144 and the reverse drive gear 146, respectively. In "the neutral position", the third selection mechanism 130 engages with neither the engagement members E5 nor ER. A third engagement groove S3-1 including an annular shape is formed at an outer circumference of the third sleeve S3. A third shift fork F3 engages with the third engagement groove S3-1.

In a case where the third sleeve S3 is shifted by the third shift fork F3 towards the fifth drive gear 145, the rotations of the output shaft 42 and the fifth drive gear 145 are synchronized with each other, and thereafter both of these are integrally connected with each other to establish the fifth speed stage. In addition, in a case where the third sleeve S3 is shifted by the third shift fork F3 towards the reverse drive gear 146, the rotations of the output shaft 42 and the reverse drive gear 146 are synchronized with each other, and thereafter both of these are directly connected with each other to establish a reverse stage.

The shift forks F1 to F3 are moved by the shift operation mechanism 47, each speed stage is formed at the manual transmission 4, and the manual transmission 4 is set to "neutral". The shift operation mechanism 47 is provided with a gear position sensor 48 which detects the current speed stage (including the neutral) and outputs the detection signal to the control portion 10.

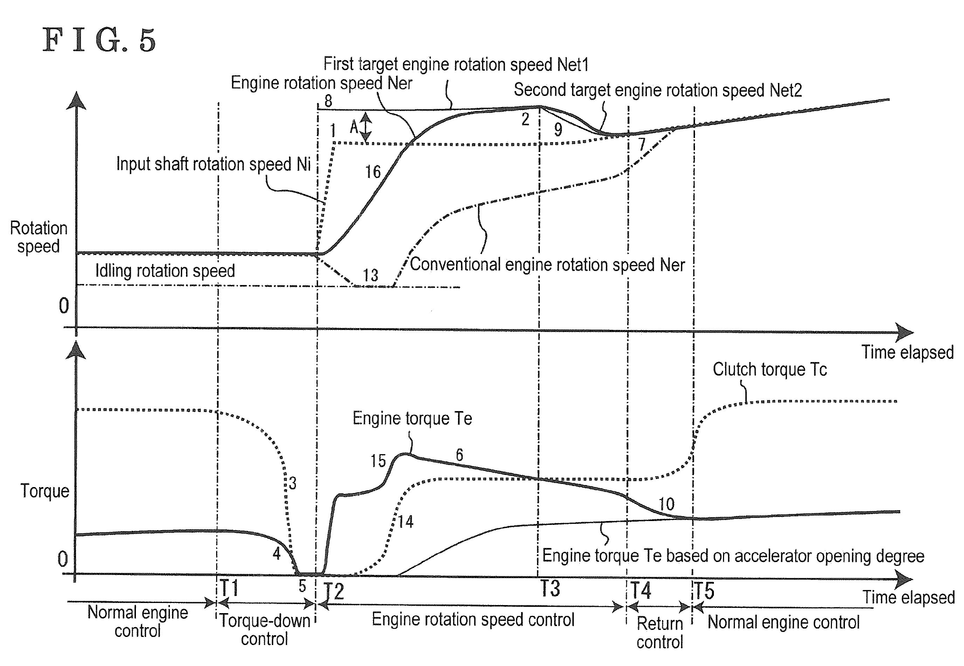

(Outline of the present embodiment) [Down-shift speed change] An outline of the present embodiment in a case where the down-shift speed change is performed will be described with reference to Fig. 5. Fig. 5 illustrates a time chart in a case where the down-shift speed change is performed under the circumstances where the driver has an intention of acceleration.

In the present embodiment, in a case where the driver performs the speed change, from the start of disengagement of the clutch 3, that is, from when the clutch 3 becomes not in a completely-engaged state (T1 of Fig. 5) until the clutch 3 is completely engaged after completion of the speed change, a target engine torque Tet is calculated on the basis of the following formula (1) but not on the basis of the accelerator opening degree Ac, and the engine 2 is controlled to achieve such target engine torque Tet.

$$Tet = Tc + Ten + Tk \ldots (1)$$

Tet: Target engine torque
Tc: Clutch torque
Ten: Engine rotation speed adjustment torque
Tk: Maintaining torque

The engine rotation speed adjustment torque Ten is a torque for controlling the engine rotation speed Ner so that the engine rotation speed Ner is the target engine rotation speed Net. The target engine rotation speed Net is a rotation speed of the engine 2 which prevents shock from occurring at the engagement of the clutch 3 after the speed change. In addition, the maintaining torque Tk is a torque necessary for maintaining the target engine rotation speed Net, other than the clutch torque Tc and the engine rotation speed adjustment torque Ten, and the maintaining torque Tk is calculated according to an engine friction torque Tef and/or according to load by an auxiliary machine connected to the drive shaft 21 of the engine 2, for example.

In a case where the down-shift speed change is performed and the input shaft rotation speed Ni increases (1 of Fig. 5), the engine rotation speed Ner is controlled (2 of Fig. 5) to be the target engine rotation speed Net that is a rotation speed higher than the input shaft rotation speed Ni by a predetermined rotation speed (for example, 200 r.p.m. to 300 r.p.m.).

Thus, the engine rotation speed Ner is controlled to the target engine rotation speed Net automatically, but not by the pressing down of the accelerator pedal 51 by the driver, and accordingly deceleration of the vehicle and/or a shift shock, which attribute to that the engine rotation speed Ner is lower than the input shaft rotation speed Ni at the down-shift speed change, can be prevented from occurring. The target engine rotation speed Net is set to be higher than the input shaft rotation speed Ni by the predetermined rotation speed in order that a sense of deceleration of the vehicle is prevented at a time of the engagement of the clutch 3.

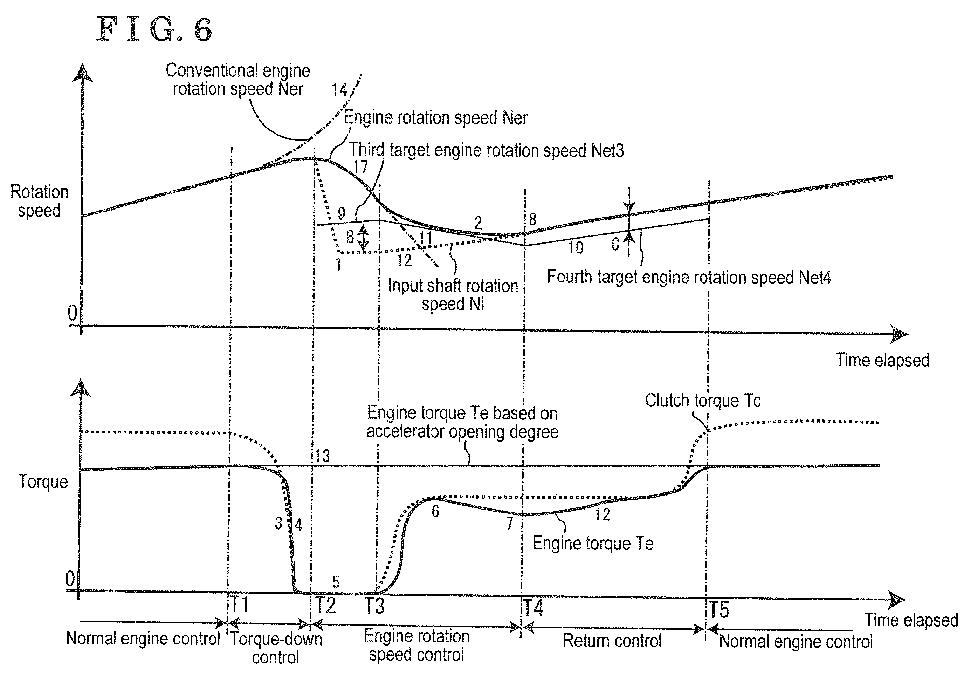

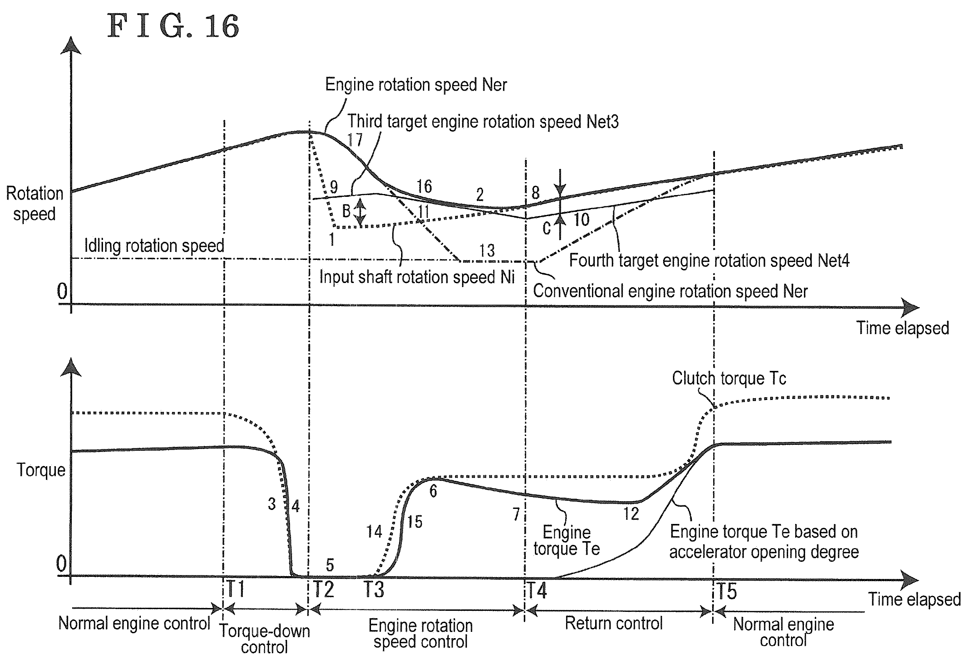

[Up-shift speed change] An outline of the present embodiment in a case where the up-shift speed change is performed will be described with reference to Fig. 6 and/or Fig. 16. Fig. 6 and Fig. 16 illustrate time charts in a case where the up-shift speed change is performed under the circumstances where the driver has the intention of acceleration. Also in a case of the up-shift speed change, the target engine torque Tet is calculated on the basis of the formula (1).

In a case where the up-shift speed change is performed and the input shaft rotation speed Ni decreases (1 of Fig. 6 and/or Fig. 16), a third target engine rotation speed Net3 which is higher than the input shaft rotation speed Ni by a second specified rotation speed (for example, 200 r.p.m. to 300 r.p.m.) is set (9 of Fig. 6 and/or Fig. 16). Then, a fourth target engine rotation speed Net4 which changes from the third target engine rotation speed Net3 to a rotation speed that is lower by a third specified rotation speed (for example, 200 r.p.m. to 300 r.p.m.) is set (10 of Fig. 6 and/or Fig. 16). Then, the engine rotation speed Ner is controlled to be the third target engine rotation speed Net3 and /or the fourth target engine rotation speed Net4 (16, 2 of Fig. 6 and/or Fig. 16).

Thus, the engine rotation speed Ner is controlled to be the target engine rotation speed Net automatically, but not by the pressing down of the accelerator pedal 51 by the driver, and accordingly the vehicle shift change shock, which attributes to that the engine rotation speed Ner deviates from the input shaft rotation speed Ni at the up-shift speed change, can be prevented from occurring.

The fourth target engine rotation speed Net4 is set to be lower than the input shaft rotation speed Ni by the third specified rotation speed C in order to prevent the engine rotation speed Ner from increasing and deviating from the input shaft rotation speed Ni, and thus to prevent the synchronous state from being released after the engine rotation speed Ner has synchronized with the input shaft rotation speed Ni. In other words, because the target engine torque Tet is calculated on the basis of the formula (1), setting the target engine rotation speed Net to be lower than the input shaft rotation speed Ni by a predetermined rotation speed means that the engine torque Te is smaller than the clutch torque Tc (7 of Fig. 6 and/or Fig. 16). Then, because the engine torque Te is smaller than the clutch torque Tc and a coefficient of static friction of the clutch 3 when the clutch 3 is synchronized is greater than a coefficient of dynamic friction of the clutch 3 when the clutch 3 is not synchronized, the synchronization of the engine rotation speed Ner with the input shaft rotation speed Ni is not released.

[Effects] As described above, in the present embodiment, in a case where the driver performs the speed change, from the start of disengagement of the clutch 3 until the complete engagement of the clutch 3 after completion of the speed change, the engine rotation speed Ner is controlled to be in synchronous with the input shaft rotation speed Ni without depending on the operations of the accelerator pedal 51 and the clutch pedal 53 by the driver. Accordingly, a burden to the driver is reduced.

In addition, when the down-shift speed change and/or the up-shift speed change are performed, the engine 2 is controlled by the target engine torque Tet calculated according to the formula (1). Therefore, even in a case where the driver presses down the clutch pedal 53 and the clutch torque Tc decreases in a clutch half-engaged state of the clutch 3, the target engine torque Tet decreases without waiting for the engine rotation speed Ner to increase, and consequently the engine rotation speed Ner is prevented from increasing. As a result, noise related to the increase of the engine rotation speed Ner is prevented from occurring and the shock at the engagement of the clutch 3 which attributes to the deviation of the engine rotation speed Ner from the input shaft rotation speed Ni is prevented from occurring.

In addition, even in a case where the driver releases the clutch pedal 53 suddenly in the clutch half-engaged state of the clutch 3 and thus the clutch torque Tc increases rapidly, the target engine torque Tet increases without waiting for the engine rotation speed Ner to decreases, thereby preventing the engine rotation speed Ner from decreasing rapidly. Accordingly, engine stall is prevented from occurring and the shock at the engagement of the clutch 3 which attributes to the deviation of the engine rotation speed Ner from the input shaft rotation speed Ni is prevented from occurring.

Thus, in the present embodiment, because the target engine torque Tet is calculated by the formula (1), the target engine torque Tet fluctuates in association with fluctuation of the clutch torque Tc. Then, as the clutch torque Tc decreases, the target engine torque Tet decreases, too, and as the clutch torque Tc increases, the target engine torque Tet increases, too. That is, the engine rotation speed Ner is feedforward-controlled by the fluctuation of the clutch torque Tc without waiting for the engine rotation speed Ner to increase and/or decrease.

In addition, the target engine torque Tet is calculated on the basis of the engine rotation speed adjustment torque Ten that controls the engine rotation speed Ner to the target engine rotation speed Net. Thus, the engine rotation speed Ner is feedback-controlled to the target engine rotation speed Net. The details will be described hereunder.

(Clutch/engine cooperative control) "A clutch/engine cooperative control" will be described using the flowchart of Fig. 7. In a case where an ignition key of the vehicle is turned ON and the engine 2 is started, "the clutch/engine cooperative control" starts, and the program proceeds to S 11.

In a case where the control portion 10 determines that the vehicle speed V is equal to or more than a specified speed (for example, 15 km) at S11 (S11: YES), the control portion 10 moves the program to S12. In a case where the control portion 10 determines that the vehicle speed V is slower than the specified speed (S11: NO), the control portion 10 moves the program to S41. The processing at S11 is executed for the purpose of determining whether it is a clutch operation at a starting state of the vehicle from a stopped state or it is a clutch operation at the speed change, and executing "a torque-down control" and/or "an engine rotation speed control", which will be described below, only when it is the clutch operation at the speed change.

At S12, the control portion 10 moves the program to S13 in a case where the control portion 10 determines that the intention of acceleration of the driver is present (S12: YES), and the control portion 10 moves the program to S41 in a case where the control portion 10 determines that the intention of acceleration of the driver is absent (S12: NO). The control portion 10 determines the presence/absence of the intention of acceleration of the driver on the basis of a detection signal from the acceleration sensor 52 and on the basis of an operation amount of the accelerator pedal 51 (the accelerator opening degree Ac) immediately before S12. For example, in a case where the accelerator pedal 51 is being pressed down or in a case where the accelerator pedal 51 was pressed down immediately before S12, the control portion 10 determines that the intention of acceleration of the driver is present.

In a case where the driver performs a double clutch operation for the purpose of reducing a burden on a synchronizer mechanism in the manual transmission 4 by disengaging the clutch 3 while returning the accelerator pedal 51 to bring the manual transmission 4 into the neutral state and then by adjusting the engine rotation speed Ner while engaging the clutch 3, the control portion 10 detects the double clutch operation and determines that the intention of acceleration is present.

In addition, in a case where the control portion 10 determines on the basis of a detection signal from the brake sensor 57 that the brake pedal 56 is pressed down, the control portion 10 determines that an intention of deceleration of the driver is present and that the intention of acceleration of the driver is absent.

At S13, in a case where the control portion 10 determines on the basis of a detection signal of the clutch sensor 54 that the clutch 3 is not in the completely-engaged state, that is, the clutch 3 is in the half-engaged state (the clutch torque Tc is not maximum) (S13: YES), the control portion 10 moves the program to S14. In a case where the control portion 10 determines that the clutch 3 is in the completely-engaged state (S 13: NO), the control portion 10 moves the program to S41.

At S14, in a case where the control portion 10 determines on the basis of the detection signal from the gear position sensor 48 that it is before execution of the speed change in the manual transmission 4 (S14: YES), the control portion 10 moves the program to S21. In a case where the control portion 10 determines that the speed change is being performed (S14: NO), the control portion 10 moves the program to S31.

At S21, the control portion 10 executes "the torque-down control". "The torque-down control" will be described below. When S21 is ended, the program proceeds to S22.

At S22, in a case where the control portion 10 determines that the engine rotation speed Ner is equal to or less than a first specified rotation speed (for example, 1000 r.p.m.) which is higher than the idling rotation speed by a predetermined rotation speed, the control portion 10 moves the program to S31. In a case where the control portion 10 determines that the engine rotation speed Ner is equal to or more than a second specified rotation speed (for example, 5500 r.p.m.) which is lower than a rev limit rotation speed by a predetermined rotation speed (S22: YES), the control portion 10 moves the program to S31. In addition, in a case where the control portion 10 determines that the engine rotation speed Ner is faster than the first specified rotation speed and is slower than the second specified rotation speed (S22: NO), the control portion 10 moves the program back to S14.

At S31, the control portion 10 executes "the engine rotation speed control". "The engine rotation speed control" will be described below. When S31 is ended, the program proceeds to S32.

At S32, in a case where the control portion 10 determines on the basis of the detection signal from the clutch sensor 54 that the clutch 3 is not completely disconnected, i.e., the clutch torque Tc is not 0 (is in the half-engaged state) and the clutch difference rotation speed Δc is 0 (S32: YES), the control portion 10 moves the program to S33. In a case where the control portion 10 determines that the clutch torque Tc is 0 or that the clutch difference rotation speed Δc is not 0 (S32: NO), the control portion 10 moves the program back to S31.

At S33, the control portion 10 executes "a return control". "The return control" will be described below. When S33 is ended, the program proceeds to S34.

At S34, in a case where the control portion 10 determines that "the return control" is completed (S34: YES), the control portion 10 moves the program to S41. In a case where the control portion 10 determines that "the return control" is not completed (S34: NO), the control portion 10 moves the program to S33.

At S41, in a case where "the return control" is started, the control portion 10 ends "the return control". The control portion 10 executes "a normal engine control". That is, the control portion 10 controls the engine 2 so that the engine torque Te becomes the required engine torque Ter calculated on the basis of the operation of the accelerator pedal 51 which is performed by the driver. When S41 is ended, the program returns to S11.

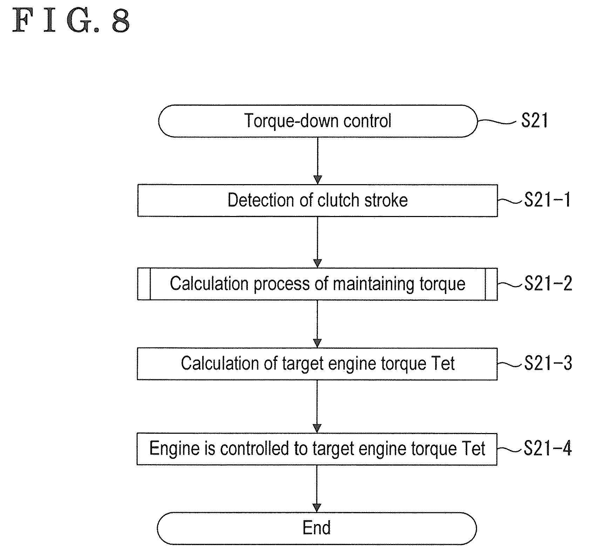

(Torque-down control) A torque-down control will be described hereunder using the flowchart shown in Fig. 8. When the torque-down control is started, the control portion 10 obtains the clutch stroke Cl from the clutch sensor 54 at S21-1. When S21-1 is ended, the program proceeds to S21-2.

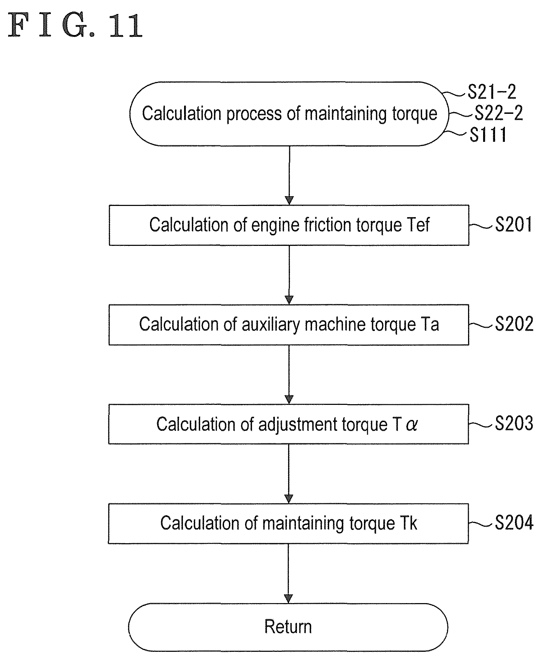

At S21-2, the control portion 10 starts "a maintaining torque calculation process" in which the maintaining torque Tk is calculated. "The maintaining torque calculation process" will be described using the flowchart shown in Fig. 11. When "the maintaining torque calculation process" is started, the program proceeds to S201.

At S201, the control portion 10 calculates the engine friction torque Tef on the basis of the current oil temperature t and the current engine rotation speed Ner. When S201 is ended, the program proceeds to S202.

At S202, the control portion 10 calculates an auxiliary machine torque Ta. The auxiliary machine torque Ta is a torque necessary for driving the auxiliary machine connected to the drive shaft 21 of the engine 2, and corresponds to a total torque of a friction torque and an inertia torque of the auxiliary machine. A method of calculating a compressor auxiliary machine torque Tac of the compressor 27a of the air conditioner 27, which is one of the auxiliary machines, will be described below. By referring the current engine rotation speed Ner to "compressor auxiliary machine torque calculation data" shown in Fig. 12 and representing a relationship between "the engine rotation speed" and "the compressor auxiliary machine torque", the control portion 10 calculates the compressor auxiliary machine torque Tac.

The faster the engine rotation speed Ner is, the greater the auxiliary machine torque Tac is set. In addition, the auxiliary machine torque Tac is set to be greater in a case where the air conditioner is ON compared to a case where the air condition is OFF. In a case where the current engine rotation speed Ner is between "engine rotation speeds" which are specified in "the compressor auxiliary machine torque calculation data" shown in Fig. 12, the auxiliary machine torque Tac is calculated by linearly-interpolating "the compressor auxiliary machine torques" which correspond to "the engine rotation speeds" neighboring to the current engine rotation speed Ner at both sides thereof.

In a similar manner to the calculation method of the compressor auxiliary machine torque Tac, the control portion 10 calculates a generator auxiliary machine torque Tag of the generator 26, which is one of the auxiliary machines, and/or an auxiliary machine torque of other auxiliary machine connected to the drive shaft 21 of the engine 2. Then, the control portion 10 calculates the auxiliary machine torque Ta by summing up the compressor auxiliary machine torque Tac and the generator auxiliary machine torque Tag, for example. When S202 is ended, the program proceeds to S203.

At S203, the control potion 10 calculates an adjustment torque $\alpha$. The adjustment torque $\alpha$ is a necessary torque other than the engine friction torque Tef and the auxiliary machine torque Ta, and the adjustment torque $\alpha$ is calculated on the basis of information including, for example, the engine rotation speed Ner. When S203 is ended, the program proceeds to S204.

At S204, the control portion 10 calculates the maintaining torque Tk on the basis of the following formula (2).

$$Tk = Tef + Ta + T\alpha \ldots (2)$$

Tk ... Maintaining torque
Tef ... Engine friction torque
Ta ...Auxiliary machine torque
T$\alpha$ ... Adjustment torque

When S204 is ended, "the maintaining torque calculation process" ends and the program proceeds to S21-3 of Fig. 8.

At S21-3, the control portion 10 calculates the target engine torque Tet on the basis of the following formula (3).

$$Tet = Tc + Tk \ldots (3)$$

Tet: Target engine torque
Tc : Clutch torque
Tk: Maintaining torque

When S21-3 is ended, the program proceeds to S21-4.

At S21-4, the control portion 10 controls the engine 2 to achieve the target engine torque Tet. When S21-4 is ended, the program proceeds to S22 of Fig. 7.

Due to "the torque-down control", the engine torque Te decreases (4 of Fig. 5 and/or Fig. 6) as the clutch torque Tc decreases (3 of Fig. 5 and/or Fig. 6), and the engine torque Te becomes 0 as the clutch torque Tc becomes 0 (5 of Fig. 5 and/or Fig. 6).

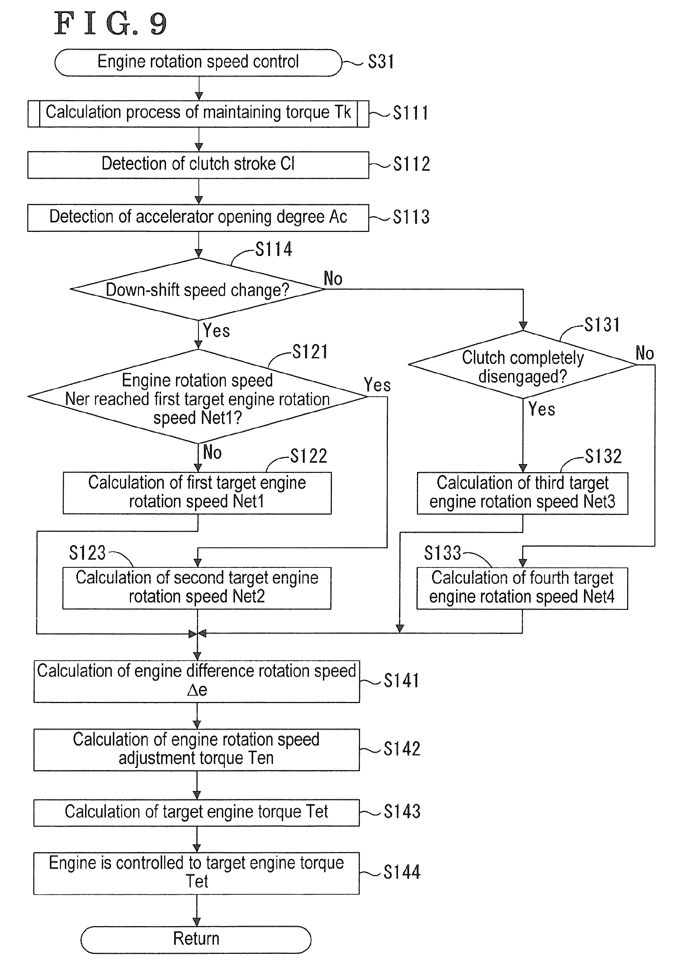

(Engine rotation speed control) "The engine rotation speed control" will be described hereunder using the flowchart shown in Fig. 9. When the engine rotation speed control is started, the control portion 10 starts the above-described "the maintaining torque calculation process" (shown in Fig. 11) at S111. When S111 is ended, the program proceeds to S 112.

The control portion 10 obtains the clutch stroke Cl from the clutch sensor 54 at S112 and obtains the accelerator opening degree Ac from the acceleration sensor 52 at S113. When S113 is ended, the program proceeds to S114.

In a case where the down-shift speed change is determined (S114: YES) on the basis of the detection signal from the gear position sensor 48 or on the basis of the determination made at S22 in Fig. 7, the program proceeds to S121. In a case where the up-shift speed change is determined (S114: NO) on the basis of the detection signal from the gear position sensor 48 or on the basis of the determination made at S22 in Fig. 7, the program proceeds to S 131. In a case where the control portion 10 determines that the engine rotation speed Ner is equal to or less than the first specified rotation speed at S22, the control potion 10 predicts that it is the down-shift speed change and moves the program to S121. In addition, in a case where the control portion 10 determines that the engine rotation speed Ner is equal to or more than the second specified rotation speed at S22, the control potion 10 predicts that it is the up-shift speed change and moves the program to S 131.

In a case where the control portion 10 determines that the engine rotation speed Ner is not a first target engine rotation speed Net1 at S121 (S121: NO), the control portion 10 moves the program to S122. At S121, in a case where the control portion 10 determines that the engine rotation speed Ner has reached the first target engine rotation speed Net1 (S121: YES), the control portion 10 moves the program to S 123.

At S122, the control portion 10 calculates the first target engine rotation speed Net1 (8 of Fig. 5) which is obtained by adding a first specified rotation speed A (for example, 200 r.p.m. to 300 r.p.m.) to the input shaft rotation speed Ni which is the input shaft rotation speed Ni after completion of the down-shift speed change (1 of Fig. 5). In a case where it is before execution of the down-shift speed change or the down-shift speed change is being executed, the control portion 10 calculates the input shaft rotation speed Ni which is the input shaft rotation speed Ni after completion of the down-shift speed change on the basis of the output shaft rotation speed No detected from the output shaft rotation speed sensor 46 and on the basis of the change gear ratio after the down-shift speed change, and then the control portion 10 adds the first specified rotation speed A to such input shaft rotation speed Ni to calculate the first target engine rotation speed Net1. In a case where it is after completion of the down-shift speed change, the control portion 10 adds the first specified rotation speed A to the input shaft rotation speed Ni detected by the input shaft rotation speed sensor 43 to calculate the first target engine rotation speed Net1. When S122 is ended, the program proceeds to S141.

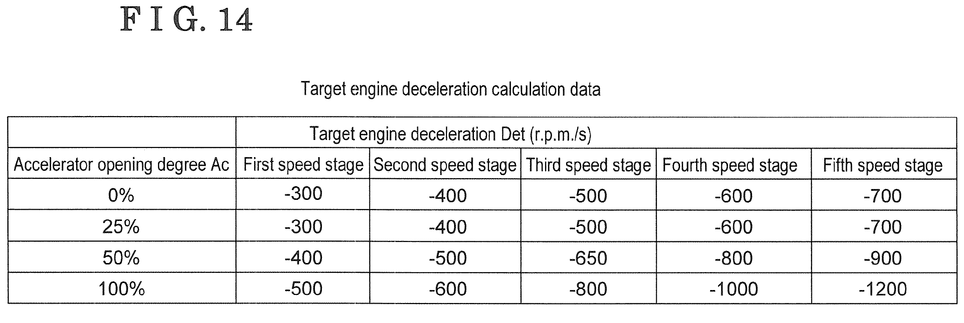

The control portion 10 calculates a second target engine rotation speed Net2 at S123. Specifically, first, by referring the accelerator opening degree Ac obtained at S 113 and the current speed stage detected at the gear position sensor 48 to "target engine deceleration calculation data" shown in Fig. 14, the control portion 10 calculates a target engine deceleration Det. As shown in Fig. 14, according to "the target engine deceleration calculation data", the greater the accelerator opening degree Ac, the greater the target engine deceleration Det is set, and the higher the speed stage, the greater the target engine deceleration Det is set.

In a case where the accelerator opening degree Ac is between "accelerator openings" which are set in "the target engine deceleration calculation data" shown in Fig. 14, the target engine deceleration Eet is calculated by linearly-interpolating "the target engine decelerations" which correspond to "the accelerator opening degrees" neighboring to the current accelerator opening degree Ac at both sides thereof.

Next, the control portion 10 calculates the second target engine rotation speed Net2 on the basis of the following formula (4).

$$ Net2\,(n) = Net2\,(n - 1) + Det \times et \dots (4) $$

Net2 (n): Second target engine rotation speed
Net2 (n - 1): Second target engine rotation speed which is previously calculated
Det: Target engine deceleration
et: Elapsed time from the previous S123

In a case where S123 is executed for the first time, the second target engine rotation speed Net2 (n - 1) is the first target engine rotation speed Net1 that is last calculated. In addition, in a case where the second target engine rotation speed Net2 calculated on the basis of the formula (4) is equal to or less than the input shaft rotation speed Ni, the second target engine rotation speed Net2 is set at the input shaft rotation speed Ni.

In the processing at S123, the second target engine rotation speed Net2 is calculated such that the greater the accelerator opening degree Ac is, that is, the greater the required engine torque Ter is, in the shorter time the second target engine rotation speed Net2 changes to the input shaft rotation speed Ni which is the input shaft rotation speed Ni after completion of the speed change gradually. In addition, the second target engine rotation speed Net2 is calculated such that the higher the speed stage after shifted, in the shorter time the second target engine rotation speed Net2 changes to the input shaft rotation speed Ni which is the input shaft rotation speed Ni after completion of the speed change gradually. When S123 is ended, the program proceeds to S 141.

At S131, the control portion 10 moves the program to S132 in a case where the control portion 10 determines on the basis of the detection signal from the clutch sensor 54 that the clutch 3 is completely disengaged (S 131: YES). At S 131, the control portion 10 moves the program to S133 in a case where the control portion 10 determines that the clutch 3 is not completely disengaged, i.e., that the clutch 3 is in the clutch half-engaged state (S 131: NO).

At S132, the control portion 10 calculates the third target engine rotation speed Net3 which is calculated by adding the second specified rotation speed B (for example, 200 r.p.m. to 300 r.p.m.) to the input shaft rotation speed Ni which is the input shaft rotation speed Ni after the completion of the up-shift speed change as shown in Fig. 6 and/or Fig. 16. In a case where it is before execution of the up-shift speed change or the up-shift speed change is being executed, the control portion 10 calculates the input shaft rotation speed Ni which is the input shaft rotation speed after the up-shift speed change on the basis of the output shaft rotation speed No detected from the output shaft rotation speed sensor 46 and on the basis of the change gear ratio after the down-shift speed change, and then the control portion 10 adds the second specified rotation speed B to such input shaft rotation speed Ni to calculate the third target engine rotation speed Net3. In a case where it is after completion of the up-shift speed change, the control portion 10 adds the second specified rotation speed B to the input shaft rotation speed Ni detected by the input shaft rotation speed sensor 43 to calculate the third target engine rotation speed Net3. When S132 is ended, the program proceeds to S 141.

The control portion 10 calculates the fourth target engine rotation speed Net4 at S133. Specifically, first, by referring the accelerator opening degree Ac obtained at S 113 and the current speed stage detected at the gear position sensor 48 to "the target engine deceleration calculation data" shown in Fig. 14, the control portion 10 calculates the target engine deceleration Det.

Next, the control portion 10 calculates the fourth target engine rotation speed Net4 on the basis of the following formula (5).

$$\text{Net4 (n)} = \text{Net4 (n - 1)} + \text{Det} \times \text{et} \dots (5)$$

Net4 (n): Fourth target engine rotation speed
Net4 (n - 1): Fourth target engine rotation speed which is previously calculated
Det: Target engine deceleration
et: Elapsed time from the previous S133

In a case where S133 is executed for the first time, the fourth target engine rotation speed Net4 (n - 1) is the third target engine rotation speed Net3 that is last calculated. In addition, in a case where the fourth target engine rotation speed Net4 calculated on the basis of the formula (5) is equal to or less than a rotation speed which is obtained by subtracting the third specified rotation speed C from the input shaft rotation speed Ni, the rotation speed which is obtained by subtracting the third specified rotation speed C from the input shaft rotation speed Ni is set as the fourth target engine rotation speed Net4 (10 of Fig. 6 and/or Fig. 16). When S133 is ended, the program proceeds to S 141.

At S141, the control portion 10 subtracts the engine rotation speed Ner from the target engine rotation speed Net1 to Net4 to calculate an engine difference rotation speed Δe. When S 141 is ended, the program proceeds to S142.

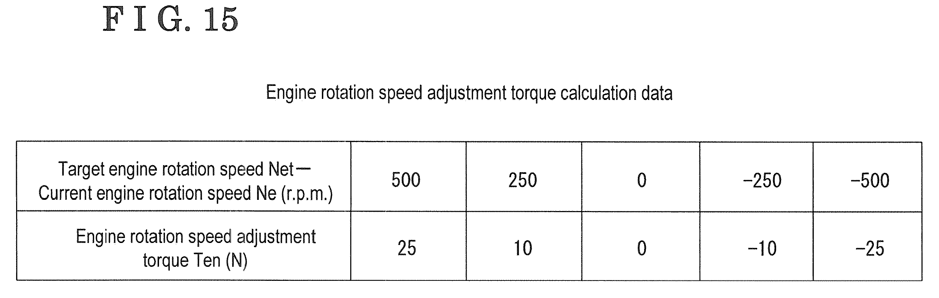

At S142, by referring the engine difference rotation speed Δe to "engine rotation speed adjustment torque calculation data" shown in Fig. 15, the control portion 10 calculates the engine rotation speed adjustment torque Ten.

The greater an absolute value of the engine difference rotation speed Δe is, the greater the engine rotation speed adjustment torque Ten is set. In addition, in a case where the engine difference rotation speed Δe is a plus value, that is, in a case where the target engine rotation speed Net is faster than the current engine rotation speed Ner, the engine rotation speed adjustment torque Ten is a plus value. Further, in a case where the engine difference rotation speed Δe is a minus value, that is, in a case where the target engine rotation speed Net is slower than the current engine rotation speed Ner, the engine rotation speed adjustment torque Ten is a minus value. When S142 is ended, the program proceeds to S143.

At S 143, the control portion 10 calculates the target engine torque Tet on the basis of the formula (1). When S143 is ended, the program proceeds to S144.

At S 144, the control portion 10 controls the engine 2 to achieve the target engine torque Tet. When S144 is ended, the program proceeds to S32 of Fig. 7.

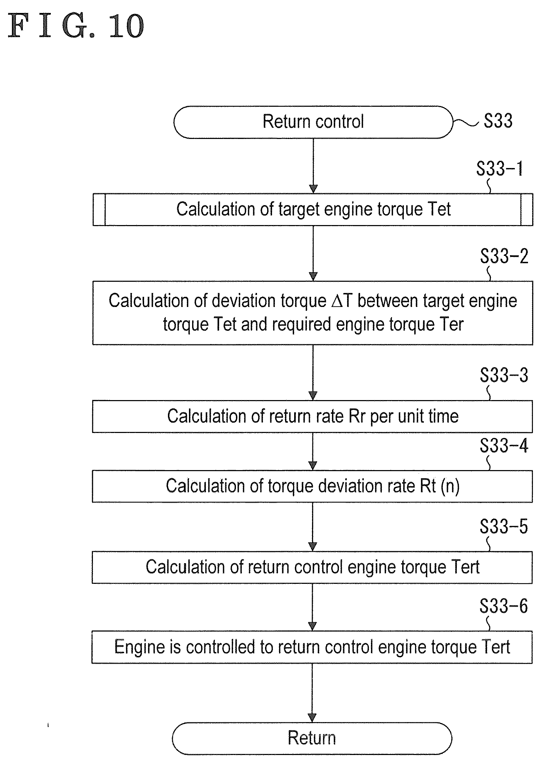

(Return control) "The return control" will be described hereunder by using the flowchart shown in Fig. 10. When the return control is started, the program proceeds to S33-1. At S33-1, the control portion 10 calculates the target engine torque Tet in a similar method to S111 to S 143 of "the engine rotation speed control" shown in Fig. 9 as described above. When S33-1 is ended, the program proceeds to S33-2.

At S33-2, the control portion 10 calculates a deviation torque ΔT by subtracting the required engine torque Ter from the target engine torque Tet on the basis of the following formula (6).

$$\Delta T = \text{Tet} - \text{Ter} \dots (6)$$

ΔT: Deviation torque
Tet: Target engine torque
Ter: Required engine torque

When S33-2 is ended, the program proceeds to S33-3.

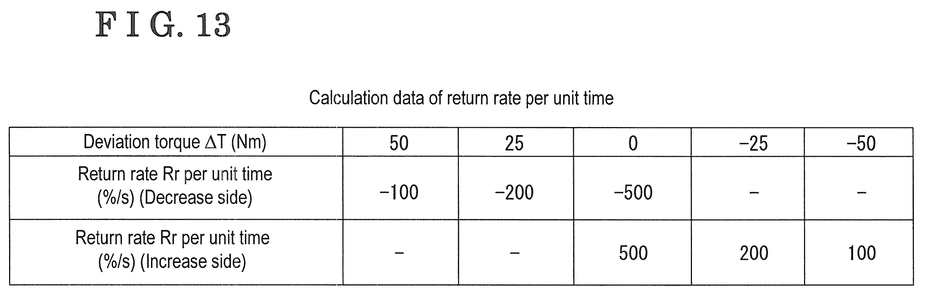

At S33-3, by referring the deviation torque ΔT to "calculation data of return rate per unit time" shown in Fig. 13, the control portion 10 calculates a return rate Rr per unit time. The return rate Rr per unit time is a percentage per unit time for reducing a torque deviation rate Rt which will be described below.

In a case where the deviation torque $\Delta T$ is a plus value, that is, in a case where the current target engine torque Tet is greater than the required engine torque Ter, the return rate Rr per unit time is a minus value. On the other hand, in a case where the deviation torque $\Delta T$ is a minus value, that is, in a case where the required engine torque Ter is greater than the current target engine torque Tet, the return rate Rr per unit time is a plus value.

In addition, the calculation is performed such that the greater the absolute value of the deviation torque $\Delta T$ is, the smaller the absolute value of the return rate Rr per unit time is. In a case where the deviation torque $\Delta T$ is between "deviation torques" which are specified in "the calculation data of return rate per unit time" shown in Fig. 13, the return rate Rr per unit time is calculated by linearly-interpolating "the return rates per unit time" which correspond to "the deviation torques" neighboring to the current deviation torque $\Delta T$ at both sides thereof. When S33-3 is ended, the program proceeds to S33-4.

At S33-4, the control portion 10 calculates the torque deviation rate Rt (n) on the basis of the following formula (7).

$$Rt\,(n) = Rt\,(n-1) - Rr \times et \ldots (7)$$

Rt (n): Torque deviation rate
Rt (n - 1): Torque deviation rate which is previously calculated
Rr: Return rate per unit time
et: Elapsed time from the previous S33-4

In a case where S33-4 is executed for the first time, Rt (n - 1) is 100. When S33-4 is ended, the program proceeds to S33-5.

At S33-5, the control portion 10 calculates a return control engine torque Tert on the basis of the following formula (8).

$$Tert = Ter + \Delta T \times Rt\,(n)/100 \ldots (8)$$

Tert: Return control engine torque
Ter: Required engine torque
$\Delta T$: Deviation torque
Rt (n): Torque deviation rate

When S33-5 is ended, the program proceeds to S33-6.

At S33-6, the control portion 10 controls the engine 2 so that the engine torque Te becomes the return control engine torque Tert. After S33-6 is completed, the program proceeds to S34 of Fig. 7.

(Effects of the present embodiment) As is evident from the above explanation, the control portion 10 (a speed change target engine torque calculation portion) calculates the target engine torque Tet on the basis of the clutch torque Tc at S 143 of Fig. 9 in a case where the clutch 3 is not completely engaged (determined as YES at S13 of Fig. 7). Then, at S144 of Fig. 9, the control portion 10 controls the engine 2 to achieve the target engine torque Tet (15 and 6 of Fig. 5, and 6 and 7 of Fig. 6 and Fig. 16).

Consequently, in a case where the speed change is executed after the clutch 3 is disconnected, and then the clutch 3 is gradually engaged, the engine 2 is controlled to the target engine torque Tet calculated on the basis of the clutch torque Tc. Accordingly, in a case where the clutch torque Tc is fluctuated by the operation of the clutch pedal 53 by the driver, the target engine torque Tet fluctuates according to the fluctuation of the clutch torque Tc. Therefore, the occurrence of the shock related to the engagement of the clutch 3 after the speed change can be reduced.

That is, after the speed change, in a case where the driver releases the clutch pedal 53 and thus the clutch torque Tc increases, the target engine torque Tet also increases. Therefore, the deceleration of the vehicle speed at the engagement of the clutch 3 can be restricted from occurring and the shock at the engagement of the clutch 3 can be restricted from occurring.

In addition, in a case where the driver presses down the accelerator pedal 51 and the clutch pedal 53, the target engine torque Tet decreases in association with the decrease of the clutch torque Tc, and thus the engine rotation speed Ner is prevented from increasing. Thus, in a case where the driver releases the clutch pedal 53 again and the clutch 3 is engaged, the shock can be restricted from occurring which attributes to the engine rotation speed Ner being higher than the input shaft rotation speed Ni.

In addition, at S122, S123, S132 and S133 of Fig. 9, the control portion 10 (a target engine rotation speed calculation portion) calculates the target engine rotation speeds Net1 to Net4 which are for making the engine rotation speed Ner close to the input shaft rotation speed Ni after the speed change. Then, at S141 of Fig. 9, the control portion 10 (an engine rotation speed adjustment torque calculation portion) calculates the engine difference rotation speed $\Delta e$ by subtracting the current engine rotation speed Ner from the target engine rotation speed Net. Next, at S142, by referring the engine difference rotation speed $\Delta e$ to "the engine rotation speed adjustment torque calculation data" shown in Fig. 15, the control portion 10 calculates the engine rotation speed adjustment torque Ten that makes the engine rotation speed Ner close to the input shaft rotation speed Ni. Further, at S143 of Fig. 9, the control portion 10 calculates the target engine torque Tet in a manner that the engine rotation speed adjustment torque Ten serves as one of the calculation factors.

Consequently, after the speed change, the synchronization of the engine rotation speed Ner and the input shaft rotation speed Ni with each other is facilitated. Thus, because the clutch 3 is engaged in a state where the difference rotation speed between the engine rotation speed Ner and the input shaft rotation speed Ni is small or in a state where the engine rotation speed and the input shaft rotation speed Ni are synchronized with each other, the shock associated with the engagement of the clutch 3 can be further restricted from occurring. In addition, the clutch 3 can be restricted from wearing and the life of the clutch 3 can be enhanced.

In addition, at S122, S123, S132 and S133 of Fig. 9, the control portion 10 (the target engine rotation speed calculation portion) calculates the target engine rotation speeds Net1 to Net4 on the basis of the input shaft rotation speed Ni which is the input shaft rotation speed Ni after completion of the speed change. Consequently, the target engine rotation speeds Net1 to Net4, which are for making the engine rotation speed Ner close to the input shaft rotation speed Ni after the speed change, are calculated appropriately.

In addition, in a case where the speed change at the MT corresponds to the down-shift speed change (determined as YES at S 114 of Fig. 9), at S122 of Fig. 9, the control portion 10 (the target engine rotation speed calculation portion) calculates the first target engine rotation speed Net1 by adding the first specified rotation speed A to the input shaft rotation speed Ni which is the input shaft rotation speed Ni after completion of the speed change (8 of Fig. 5). Consequently, at the engagement of the clutch 3, the decrease in the vehicle speed which attributes to that the engine rotation speed Ner is lower than the input shaft rotation speed Ni can be prevented from occurring.

That is, even though the control portion 10 controls the rotations of the engine 2, the engine rotation speed Ner does not always become identical to the rotation speed of the control target. Thus, by calculating the first target engine rotation speed Net1 by adding the first specified rotation speed A to the input shaft rotation speed Ni which is the input shaft rotation speed Ni after completion of the speed change, the vehicle speed is prevented from decreasing at the engagement of the clutch 3 even in a case where the actual engine rotation speed Ner has been controlled to a rotation speed which is lower than the first target engine rotation speed Net1. Consequently, in a case where the driver has the intention of acceleration (determined as YES at S12 of Fig. 7), it can be prevented that the driver has a sense of discomfort due to the decrease in the vehicle speed.

In addition, in a case where the speed change at the MT corresponds to the down-shift speed change and in a case where the engine rotation speed Ner has reached the target engine rotation speed Net as shown by 2 of Fig. 5 (determined as YES at S121 of Fig. 9), the control portion 10 (the target engine rotation speed calculation portion) calculates, at S123, the second target engine rotation speed Net2 that gradually becomes the input shaft rotation speed Ni corresponding to the input shaft rotation speed Ni after completion of the speed change, from the rotation speed obtained by adding the first specified rotation speed A to the input shaft rotation speed Ni corresponding to the input shaft rotation speed Ni after completion of the speed change (9 of Fig. 5). Consequently, the engine rotation speed Ner and the input shaft rotation speed Ni can be facilitated to be in synchronous with each other, and the shock can be further restricted from occurring.

In addition, at S123 of Fig. 9, by using the mapping data shown in Fig. 14, the control portion 10 (the target engine rotation speed calculation portion) calculates the second target engine rotation speed Net2 (9 of Fig. 5) such that the second target engine rotation speed Net2 gradually changes in a shorter time to the input shaft rotation speed Ni which is the input shaft rotation speed Ni after completion of the speed change as the required engine torque Ter becomes greater.

Accordingly, the greater an acceleration requirement of the driver is and the greater the accelerator opening degree Ac is, that is, the greater the required engine torque Ter is, in the shorter time the engine rotation speed Ner and the input shaft rotation speed Ni synchronize with each other. Consequently, the clutch 3 can be completely engaged in a shorter time and the vehicle can be accelerated again quickly according to the intention of the driver.

In addition, at S123 of Fig. 9, by using the mapping data shown in Fig. 14, the control portion 10 (the target engine rotation speed calculation portion) calculates the second target engine rotation speed Net2. The higher the speed stage after the down-shift speed change is, in a shorter time the second target engine rotation speed Net2 changes to the input shaft rotation speed Ni which is the input shaft rotation speed Ni after completion of the speed change.

Accordingly, in a case where the speed stage after the down-shift speed change is high, the engine rotation speed Ner and the input shaft rotation speed Ni synchronize with each other in a shorter time. In a case where the speed stage after the down-shift speed change is high, the change gear ratio (a reduction ratio) is small. Therefore, even if the engine rotation speed Ner is reduced quickly, the fluctuation of the drive force applied to the drive wheels 18R, 18L are smaller and the shock at the engagement of the clutch 3 is smaller compared to a case where the speed stage after the down-shift speed change is low. Consequently, the clutch 3 can be completely engaged in a shorter time while the shock at the time of engagement of the clutch 3 is restrained, and the vehicle can be accelerated again promptly in response to the intention of the driver.

In addition, in a case where the speed change at the MT corresponds to the up-shift speed change (determined as NO in Fig. 9), at S133 of Fig. 9, the control portion 10 (the target engine rotation speed calculation portion) calculates the fourth target engine rotation speed Net4 that changes from the third target engine rotation speed Net3 (9 of Fig. 6 and of Fig. 16), which is calculated by adding the second specified rotation speed B to the input shaft rotation speed Ni that is the input shaft rotation speed Ni after completion of the speed change, gradually to the rotation speed (10 of Fig. 6 and of Fig. 16) calculated by subtracting the third specified rotation speed C from the input shaft rotation speed Ni that is the input shaft rotation speed Ni after completion of the speed change.

Accordingly, immediately after the up-shift speed change is completed, the engine 2 is controlled to the third target engine rotation speed Net3 obtained by adding the second specified rotation speed B to the input shaft rotation speed Ni, and thus the rotation speed of the engine 2 is prevented from decreasing rapidly. The timing of the engagement of the clutch 3 depends on a timing of the operation of the clutch pedal 53 by the driver. In a case where the target engine rotation speed Net is set low, the engine rotation speed Ner decreases rapidly and becomes lower than the input shaft rotation speed Ni as indicated with the alternate long and short dash line of 12 of Fig. 6. In a case where the clutch 3 is engaged in this state, the shock is generated and the vehicle decelerates. In contrast, in the present embodiment, the shock associated with the rapid decrease of the rotation speed of the engine 2 is prevented from occurring at the time of engagement of the clutch 3.

In addition, after the speed change, the engine 2 is controlled to the fourth target engine rotation speed Net4 (11 of Fig. 6 and of Fig. 16) that gradually changes to the rotation speed (10 of Fig. 6 and of Fig. 16) calculated by subtracting the third specified rotation speed C from the input shaft rotation speed Ni which is the input shaft rotation speed Ni after completion of the up-shift speed change. Thus, as indicated by 2 of Fig. 6 and/or of Fig. 16, the synchronization of the engine rotation speed Ner and the input shaft rotation speed Ni with each other is facilitated, and the shock at the time of engagement of the clutch 3 which results from the difference rotation speed between the engine rotation speed Ner and the input shaft rotation speed Ni can be even more restricted from occurring.

In addition, because the synchronization of the engine rotation speed Ner and the input shaft rotation speed Ni with each other is facilitated, the synchronization of the engine rotation speed Ner and the input shaft rotation speed Ni with each other is completed in a shorter period of time and the clutch 3 can be completely engaged in a shorter period of time.

In addition, at S133 of Fig. 9, by using the mapping data shown in Fig. 14, the control portion 10 (the target engine rotation speed calculation portion) calculates the fourth target engine rotation speed Net4 (11 of Fig. 6 and/or of Fig. 16) that changes to the rotation speed (10 of Fig. 6 and/or of Fig. 16) obtained by subtracting the third specified rotation speed C from the input shaft rotation speed Ni which corresponds to the input shaft rotation speed Ni after completion of the speed change. The greater the accelerator opening degree Ac, that is, the greater the required engine torque Ter is, in the shorter time the fourth target engine rotation speed Net4 changes to the rotation speed (10 of Fig. 6 and/or of Fig. 16) obtained by subtracting the third specified rotation speed C from the input shaft rotation speed Ni which is the input shaft rotation speed Ni after completion of the speed change.

Accordingly, the greater the required engine torque Ter is, the more the synchronization of the engine rotation speed Ner and the input shaft rotation speed Ni with each other is promoted, and in the shorter time the synchronization of the engine rotation speed Ner and the input shaft rotation speed Ni with each other is completed. Therefore, the clutch 3 can be fully engaged in a shorter time and the vehicle can be re-accelerated quickly according to the intention of the driver.

In addition, in a case where the speed stage after the up-shift speed change is high, the change gear ratio is small. Thus, even though the engine rotation speed Ner is reduced quickly, the fluctuation in the drive force applied to the drive wheels 18R, 18L is smaller and the shock at the engagement of the clutch 3 is smaller compared to a case where the speed stage after the up-shift speed change is low. Consequently, the clutch 3 can be completely engaged in a shorter time while the shock at the engagement of the clutch 3 is restrained from occurring, and the vehicle can be accelerated again promptly according to the intention of the driver.

In addition, at S201 and S202 shown in Fig. 11, the control portion 10 (a load obtaining portion) calculates and obtains a load working on the engine 2. Then, at S204, the control portion 10 (a maintaining torque calculation portion) calculates on the basis of the load the maintaining torque Tk that is the torque necessary for maintaining the engine rotation speed Ner. Then, at S21-3 of Fig. 8 and/or S143 of Fig. 9, the control portion 10 (the speed change target engine torque calculation portion) calculates the target engine torque Tet such that the maintaining torque Tk serves as one of the calculation factors.

Accordingly, in a case where the load of the engine 2 fluctuates due to changes of, for example, presence or absence of the operation of the auxiliary machine driven by the engine 2, the target engine torque Tet added with the maintaining torque Tk that is based on the load is calculated. Therefore, in a case where the clutch 3 is not in the completely-engaged state at the speed change, increase and/or decrease of the rotation speed of the engine 2 which is associated with the fluctuation of the load of the engine 2 is prevented from occurring, and the shock is prevented from occurring at the engagement of the clutch 3.

In addition, after execution of the speed change, in a case where the clutch 3 is not completely disengaged (is in the half-engaged state) and the difference rotation speed between the engine rotation speed Ner and the input shaft rotation speed Ni becomes 0 (determined as YES at S32 of Fig. 7), the control portion 10 (a return control engine torque calculation portion) calculates at S33-5 of Fig. 10 the return control engine torque Tert which changes from the target engine torque Tet to the required engine torque Ter gradually. Then, at S33-6 of Fig. 10, the control portion 10 (an engine control portion) controls the engine 2 to achieve the return control engine torque Tert.

Accordingly, as shown by 10 of Fig. 5 and/or as shown by 12 of Fig. 6 and Fig. 16, after the speed change is completed and the clutch 3 is synchronized, the required engine torque Ter that is gradually in accordance with the intention of acceleration of the driver is gradually returned. Consequently, the fluctuation of the engine torque Te applied to the vehicle is alleviated and the feeling of discomfort of the driver can be restricted.

In addition, at S33-4 of Fig. 10, the return rate Rr per unit time is calculated such that the smaller the absolute value of the deviation torque $\Delta T$ between the target engine torque Tet and the required engine torque Ter is, the greater the absolute value of the return rate Rr per unit time is. Accordingly, the smaller the absolute value of the deviation torque $\Delta T$ is, the more quickly the engine torque Te can be returned to the required engine torque Ter that reflects the intention of the driver. Therefore, a time period when an engine control which does not reflect the intention of the driver is executed can be shortened, and the sense of discomfort of the driver can be reduced.

On the other hand, the return rate Rr per unit time is calculated such that the greater the absolute value of the deviation torque $\Delta T$ is, the smaller the absolute value of the return rate Rr per unit time is. Accordingly, in a case where the deviation torque $\Delta T$ is large, the engine torque Te is returned to the required engine torque Ter slowly. Therefore, the driver is not likely to have the sense of discomfort.

In addition, only in a case where the control portion 10 (an acceleration intention detection portion) detects the driver's intention of acceleration (determined as YES at S12 of Fig. 7), the control portion 10 calculates the target engine torque Tet at S143 of Fig. 9 and controls the engine 2 at S144 to achieve the target engine torque Tet.

Accordingly, in a case where the driver does not have the intention of acceleration, the engine 2 is not controlled by the target engine torque Tet calculated on the basis of the clutch torque Tc, thereby preventing the driver from feeling the sense of discomfort.

In addition, at S12 of Fig. 7, the control portion 10 detects the intention of acceleration of the driver on the basis of the operation amount of the accelerator pedal 51 by the driver, which is detected by the acceleration sensor 52 (a required engine torque detection portion). Accordingly, it is determined whether or not the engine 2 is controlled to the target engine torque Tet on the basis of the operation of the accelerator pedal 51 by the driver. For example, in a case where the driver is operating the accelerator pedal 51 before the speed change or during the speed change, it is determined that the driver has the intention of acceleration (determined as YES at S12 of Fig. 7). In a case where the driver is not operating the accelerator pedal 51 at all before the speed change, it is determined that the driver does not have the intention of acceleration (determined as NO at S12 of Fig. 7). As described above, by detecting the intention of acceleration of the driver appropriately, an engine control that is against the intention of the driver is prevented from starting and it can be prevented that the driver feels the sense of discomfort.

In addition, at S12 of Fig. 7, the control portion 10 detects the intention of acceleration of the driver on the basis of the operation amount of the brake pedal 56 by the driver which is detected by the brake sensor 57 (a brake operation amount detection portion, a braking force generation detection portion). Accordingly, in a case where the driver operates the brake pedal 56 before the speed change and/or during the speed change, it is determined that the driver does not have the intention of acceleration and the driver has the intention of deceleration (determined as NO at S12 of Fig. 7), the engine 2 is not controlled by the target engine torque Tet calculated on the basis of the clutch torque Tc, and engine braking can be generated at the engine 2. Consequently, the vehicle can be decelerated according to the intention of deceleration of the driver and also it is prevented that the driver feels the sense of discomfort.

In addition, the clutch stroke Cl corresponding to the operation amount of the clutch pedal 53 is detected by the clutch sensor 54 (the clutch torque obtaining portion). The control portion 10 obtains the clutch torque Tc by referring the clutch stroke Cl to "the clutch torque mapping data" shown in Fig. 2. Consequently, the clutch torque Tc can be obtained reliably with a simple configuration and method.

In addition, in a case where the vehicle speed is faster than the specified speed (determined as YES at S11 of Fig. 7), the control portion 10 calculates the target engine torque Tet at S143 of Fig. 9 and controls the engine 2 at S144 to achieve the target engine torque Tet.

Accordingly, at the start of the vehicle at which the vehicle speed is lower than the specified speed (determined as NO at S11 of Fig. 7), in a case where the clutch 3 is brought to engage, "the normal engine control" that is on the basis of the accelerator opening degree Ac is executed at S41 of Fig. 7 and the engine 2 is not controlled to be the target engine torque Tet. Consequently, it is prevented that the driver feels the sense of discomfort due to that the engine 2 is controlled against the intention of the driver at the start of the vehicle. In addition, the engine stall which attributes to that the engine 2 is controlled by the target engine torque Tet which is lower than the required engine torque Ter can be prevented from occurring.

In addition, in a case where the control portion 10 determines that the engine rotation speed Ner is equal to or less than the first specified rotation speed that is higher than the idling rotation speed by the predetermined rotation speed (determined as YES) at S22 of Fig. 7, the control portion 10 stops "the torque-down control", predicts the down-shift speed change at S114 of Fig. 9, and calculates the first target engine rotation speed Net1 for increasing the engine rotation speed Ner at S 122. Then, at S144, the control portion 10 controls the engine 2 such that the target engine torque Tet calculated on the basis of the first target engine rotation speed Net1 is achieved, and increases the engine rotation speed Ner (16 of Fig. 5).

In a state where the engine rotation speed Ner is close to the idling rotation speed, it is considered that the driver does not perform the up-shift speed change and that the driver performs the down-shift speed change. Thus, in the present embodiment, before the driver actually performs the down-shift speed change, the control is executed under which the intention of the down-shift speed change of the driver is recognized and the engine rotation speed Ner is increased. Accordingly, the increase of the engine rotation speed Ner is more quickly caused to follow the increase of the input shaft rotation speed Ni which is associated with the down-shift speed change, and the difference rotation speed between the engine rotation speed Ner and the input shaft rotation speed Ni is reduced more quickly, and consequently the occurrence of the shock associated with the engagement of the clutch 3 can be reduced.

In addition, in a case where the control portion 10 determines that the engine rotation speed Ner is equal to or more than the second specified rotation speed that is lower than the rev limit rotation speed by the predetermined rotation speed (determined as YES) at S22, the control portion 10 stops "the torque-down control", predicts the up-shift speed change at S114 of Fig. 9, and calculates the third target engine rotation speed Net3 for reducing the engine rotation speed Ner at S132. Then, at S144, the control portion 10 controls the engine 2 such that the target engine torque Tet calculated on the basis of the third target engine rotation speed Net3 is achieved, and reduces the engine rotation speed Ner (17 of Fig. 6 and/or Fig. 16).

In a state where the engine rotation speed Ner is close to the rev limit rotation speed, it is considered that the driver will not perform the down-shift speed change and that the driver will perform the up-shift speed change. Thus, in the present embodiment, before the driver actually performs the up-shift speed change, the control is executed under which the intention of the up-shift speed change of the driver is recognized and the engine rotation speed Ner is reduced. Accordingly, the reduction of the engine rotation speed Ner is more quickly caused to follow the decrease of the input shaft rotation speed Ni which is associated with the up-shift speed change, and the difference rotation speed between the engine rotation speed Ner and the input shaft rotation speed Ni can be reduced more quickly, and consequently the occurrence of the shock associated with the engagement of the clutch 3 can be reduced.

(Comparative example) Changes of the engine rotation speed Ner at the speed change at a vehicle mounted with a conventional MT will be described hereunder using Fig. 5, Fig. 6 and Fig. 16. As shown in Fig. 6, on the conventional vehicle, in a case where the driver continues to press down the accelerator pedal 51 in a state where the clutch 3 is disconnected, the engine torque Te is generated (13 of Fig. 6) and the engine rotation speed Ner increases rapidly (14 of Fig. 6). Thus, the noise is generated, fuel efficiency is worsened, and the shock occurs when the clutch 3 is engaged again.

In contrast, in the present embodiment, in a state where the clutch 3 is disconnected, the engine 2 is not controlled on the basis of the operation of the accelerator pedal 51 but engine 2 is controlled to achieve the target engine torque Tet calculated according to the operation of the clutch pedal 53 on the basis of the formula (1).

Accordingly, even though the driver keeps on pressing down the accelerator pedal 51 in a state where the clutch 3 is disconnected, the target engine torque Tet becomes 0 or a small torque (5 of Fig. 6) because the clutch torque Tc is 0, and therefore the engine rotation speed Ner does not increase (17 of Fig. 6). Thus, in the present embodiment, the engine rotation speed Ner is controlled to be the engine rotation speed that is best for the speed change without the return of the accelerator pedal 51 by the driver at the speed change operation, thereby reducing the burden to the driver at the speed change.

In addition, on the conventional vehicle, in a case where the driver releases the accelerator pedal 51 in a state where the clutch 3 is disconnected, the engine rotation speed Ner decreases to the idling rotation speed as shown by 13 of Fig. 5 and/or of Fig. 16 because the engine 2 is controlled on the basis of the operation of the accelerator pedal 51. When the clutch 3 is engaged in this state, the vehicle decelerates because the engine rotation speed Ner is lower than the input shaft rotation speed Ni, and the shock is generated.

In addition, even in a case where the driver presses down the accelerator pedal 51 again after the completion of the speed change, the engine rotational speed Ner does not increase immediately because air-fuel mixture includes an intake air inertia. Accordingly, the synchronization of the engine rotation speed Ner and the input shaft rotation speed Ni with each other is delayed and it takes time until the complete engagement of the clutch 3, and accordingly it takes time for re-acceleration after the speed change.

In contrast, in the present embodiment, in a state where the clutch 3 is not completely engaged, the engine 2 is not controlled by the operation of the accelerator pedal 51 but the engine 2 is controlled to achieve the target engine torque Tet calculated according to the operation of the clutch pedal 53 on the basis of the formula (1).

Accordingly, even in a case where the driver is not pressing down the accelerator pedal 51, the clutch 3 is in the half-engaged state, and the engine torque Te increases (15 of Fig. 5 and of Fig. 16) in association with the increase of the clutch torque Tc when the clutch torque Tc increases (14 of Fig. 5 and of Fig. 16). Thus, the engine rotation speed Ner increases in a case of the down-shift speed change as shown by 16 of Fig. 5 and the engine rotation speed Ner is prevented from decreasing as shown by 16 of Fig. 16 in a case of the up-shift speed change.

(Other embodiment) Other embodiment which is different from the above-described embodiment will be described hereunder. In the above-described embodiment, an operation force of the clutch pedal 53 is transmitted to the release bearing 37 via the master cylinder 55, the fluid pressure pipe 58 and the slave cylinder 38. However, the operation force of the clutch pedal 53 may be transmitted to the release bearing 37 via a mechanical element including a wire, a rod and gears, for example, instead of the above-stated configuration including the fluid pressure pipe.

In the above-described embodiment, the clutch torque Tc is calculated by referring the clutch stroke Cl detected by the clutch sensor 54 to "the clutch torque mapping data" shown in Fig. 2 which represents the relationship between the clutch stroke Cl and the clutch torque Tc. However, as represented in JP2008-157184A, the clutch torque Tc, which is expected to change in future, may be estimated on the basis of a change amount of the clutch stroke Cl per unit time and may be used for the calculation of the required engine torque Ter.

In the above-described embodiment, the clutch torque Tc is calculated on the basis of the detection signal of the clutch sensor 54. However, the clutch torque Tc may be calculated from information including engine inertia, engine friction torque, the rotation speed of the input shaft 41 at the start of the engagement, the current rotation speed of the input shaft 41 and a time elapsed from the start of the engagement, for example.

In the above-described embodiment, the clutch sensor 54 detects the stroke amount of the master cylinder 55. However, the clutch sensor 54 may be any of sensors which detect the operation amount of the clutch pedal 53 and/or master pressure of the master cylinder 55, stroke and/or fluid pressure of the slave cylinder 38, and a stroke amount of the release bearing 37.

In the above-described embodiment, the control portion 10 calculates the vehicle speed V on the basis of the output shaft rotation speed No detected by the output shaft rotation speed sensor 46. However, the control portion 10 may calculate the vehicle speed V on the basis of a wheel rotation speed detected by a wheel speed sensor detecting a rotation speed of the wheel, or on the basis of other sensor which detects a rotation speed of a shaft rotating in association with the wheel.

In the above-described embodiment, at S21-3 of "the torque-down control" of Fig. 8, the target engine torque Tet is calculated while the maintaining torque Tk is used as one of the calculation factors. However, the target engine torque Tet may be calculated by adding a constant value to the clutch torque Tc or subtracting a constant value from the clutch torque Tc, or by multiplying the clutch torque Tc by a predetermined value which is equal to or more than 1 or which is equal to or less than 1, without using the maintaining torque Tk as one of the calculation factors.

In a case where the target engine torque Tet is calculated as described above by adding the constant value to the clutch torque Tc or by multiplying the clutch torque Tc by the predetermined value which is equal to or more than 1, the sense of discomfort of the driver can be reduced while the rapid increase of the engine rotation speed Ner is restricted from occurring when the accelerator pedal 51 is pressed down in a state where the clutch 3 is not completely engaged. In addition, in a case where the target engine torque Tet is calculated by subtracting the constant value from the clutch torque Tc or by multiplying the clutch torque Tc by the predetermined value which is equal to or less than 1, the engine rotation speed Ner is reliably prevented from increasing when the accelerator pedal 51 is pressed down in a state where the clutch 3 is not completely engaged.

Alternatively, at S21-3 of "the torque-down control" of Fig. 8, the target engine torque Tet may be set to 0. In this embodiment, the engine rotation speed Ner can be prevented from increasing more reliably in a case where the accelerator pedal 51 is pressed down in a state where the clutch 3 is not completely engaged.

In the above-described embodiment, the clutch operation member transmitting the operation force of the driver to the clutch 3 is the clutch pedal 53. However, the clutch operation member is not limited to the clutch pedal 53 and may be a clutch lever, for example. Similarly, instead of the accelerator pedal 51 adjusting the accelerator opening degree Ac, for example, an accelerator grip adjusting the accelerator opening degree Ac may be used. Further, in a case where the vehicle drive device of the present embodiment is applied to an autobicycle and/or other vehicle, technical ideas of the present invention are applicable thereto.

In the above-described embodiment, the single control portion 10 controls the engine 2 and executes "the clutch/engine cooperative control" shown in Fig. 4. However, the engine control portion may control the engine 2, and the control portion 10 connected to the engine control portion via a communication unit including, for example, CAN (Controller Area Network) may execute "the clutch/engine cooperative control".

EXPLANATION OF REFERENCE NUMERALS

1...vehicle drive device, 2...engine, 3...clutch, 4...manual transmission, 10...control portion (speed change target engine torque calculation portion, engine control portion, target engine rotation speed calculation portion, engine rotation speed adjustment torque calculation portion, maintaining torque calculation portion, return control engine torque calculation portion, 19...brake device (braking force application portion), 21...drive shaft, 41...input shaft, 42...output shaft, 43...input shaft rotation speed sensor, 46...output shaft rotation speed sensor (vehicle speed detection portion), 51...accelerator pedal (engine operation portion), 52...acceleration sensor (required engine torque detection portion), 53...clutch pedal (clutch operation portion), 54... clutch sensor (clutch torque obtaining portion, clutch operation amount detection portion), 56...brake pedal (brake operation portion), 57...brake sensor (brake operation amount detection portion, braking force generation detection portion)

t...oil temperature
V...vehicle speed, Ner...engine rotation speed, Net...target engine rotation speed, $\Delta e$ ... engine difference rotation speed, Ni...input shaft rotation speed, Te... engine torque, Tet...target engine torque, Tc...clutch torque

**Claims**

1. A vehicle drive device comprising:

   an engine outputting an engine torque to a drive shaft and driving drive wheels;
   an engine operation portion operating the engine torque so that the engine torque is variable;
   a required engine torque detection portion detecting an operation amount of the engine operation portion and detecting a required engine torque;
   a manual transmission provided between the drive shaft and the drive wheels, and including an input shaft to which a drive force from the engine is inputted and an output shaft rotatably connected to the drive wheels, the manual transmission including a plurality of speed stages each of which including a different change gear ratio obtained by dividing a rotation speed of the input shaft by a rotation speed of the output shaft;
   a clutch provided between the drive shaft and the input shaft, and making a clutch torque between the drive shaft and the input shaft variable;
   a clutch operation portion operating the clutch torque so that the clutch torque is variable;
   a clutch torque obtaining portion obtaining the clutch torque generated by the clutch;
   a speed change target engine torque calculation portion, in a case where the clutch is not in a completely-engaged state, calculating a target engine torque at a speed change at the manual transmission on the basis of the clutch torque obtained by the clutch torque obtaining portion; and
an engine control portion controlling the engine to achieve the target engine torque in a case where the clutch is not completely engaged and controlling the engine to achieve the required engine torque in a case where the clutch is completely engaged.

2. The vehicle drive device according to claim 1, comprising:

   a target engine rotation speed calculation portion calculating a target engine rotation speed making a rotation speed of the engine close to the rotation speed of the input shaft after the speed change; and
   an engine rotation speed adjustment torque calculation portion calculating an engine rotation speed adjustment torque making the rotation speed of the engine close to the rotation speed of the input shaft on the basis of the target engine rotation speed, wherein
   the speed change target engine torque calculation portion calculates the target engine torque in a manner that the engine rotation speed adjustment torque is one of calculation factors.

3. The vehicle drive device according to claim 2, wherein the target engine rotation speed calculation portion calculates the target engine rotation speed on the basis of the rotation speed of the input shaft which is the rotation speed of the input shaft after completion of the speed change at the manual transmission.

4. The vehicle drive device according to claim 3, wherein, in a case where the speed change at the manual transmission corresponds to a down-shift speed change, the target engine rotation speed calculation portion adds a first specified rotation speed to the rotation speed of the input shaft which is the rotation speed of the input shaft after the completion of the speed change to calculate the target engine rotation speed.

5. The vehicle drive device according to claim 4, wherein, in a case where the engine rotation speed reaches the target engine rotation speed, the target engine rotation speed calculation portion calculates the target engine rotation speed changing from a rotation speed obtained by adding the first specified rotation speed to the rotation speed of the input shaft which is the rotation speed of the input shaft after the completion of the speed change to the rotation speed of the input shaft which is the rotation speed of the input shaft after the completion of the speed change.

**6.** The vehicle drive device according to claim 5, wherein, the target engine rotation speed calculation portion calculates the target engine rotation speed such that the greater the required engine torque is or the higher a speed stage after the down-shift speed change is, in the shorter time the target engine rotation speed transitions to the rotation speed of the input shaft which is the rotation speed of the input shaft after the completion of the speed change.

**7.** The vehicle drive device according to any one of claims 3 to 6, wherein, in a case where the speed change at the manual transmission corresponds to an up-shift speed change, the target engine rotation speed calculation portion calculates the target engine rotation speed changing from a rotation speed obtained by adding a second specified rotation speed to the rotation speed of the input shaft which is the rotation speed of the input shaft after the completion of the speed change to a rotation speed obtained by subtracting a third specified rotation speed from the rotation speed of the input shaft which is the rotation speed of the input shaft after the completion of the speed change.

**8.** The vehicle drive device according to claim 7, wherein the target engine rotation speed calculation portion calculates the target engine rotation speed such that the greater the required engine torque is or the higher a speed stage after the down-shift speed change is, in the shorter time the target engine rotation speed changes to the rotation speed obtained by subtracting the third specified rotation speed from the rotation speed of the input shaft which is the rotation speed of the input shaft after the completion of the speed change.

**9.** The vehicle drive device according to any one of claims 1 to 8 comprising:

a load obtaining portion obtaining a load working on the engine; and
a maintaining torque calculation portion calculating, on the basis of the load, a maintaining torque corresponding to a torque necessary to maintain the engine rotation speed, wherein
the speed change target engine torque calculation portion calculates the target engine torque in a manner that the maintaining torque is one of calculation factors.

**10.** The vehicle drive device according to any one of claims 1 to 9, comprising:

a return control engine torque calculation portion calculating a return control engine torque changing from the target engine torque to the required engine torque in a case where a difference rotation speed between the engine and the input shaft becomes 0 after the speed change is executed, wherein
the engine control portion controls the engine to achieve the return control engine torque.

**11.** The vehicle drive device according to any one of claims 1 to 10, comprising:

an acceleration intention detection portion detecting an intention of acceleration of a driver, wherein
the speed change target engine torque calculation portion calculates the target engine torque and the engine control portion controls the engine to achieve the target engine torque only in a case where the acceleration intention detection portion detects the intention of acceleration of the driver.

**12.** The vehicle drive device according to claim 11, wherein the acceleration intention detection portion corresponds to the required engine torque detection portion.

**13.** The vehicle drive device according to either claim 11 or 12, comprising:

a brake device applying a braking force to the vehicle; and
a braking force generation detection portion detecting generation of the braking force at the brake device, wherein
the acceleration intention detection portion corresponds to the braking force generation detection portion.

**14.** The vehicle drive device according to any one of claims 1 to 13, wherein the clutch torque obtaining portion corresponds to a clutch operation amount detection portion detecting an operation amount of the clutch operation portion.

**15.** The vehicle drive device according to any one of claims 1 to 14, comprising:

a vehicle speed detection portion detecting a vehicle speed of the vehicle, wherein
the speed change target engine torque calculation portion calculates the target engine torque and the engine control portion controls the engine to achieve the target engine torque in a case where the vehicle speed detected at the vehicle speed detection portion is faster than a specified speed.

**16.** The vehicle drive device according to any one of claims 3 to 15, wherein

in a case where the clutch is not completely engaged and the rotation speed of the engine before the execution of the speed change is equal to or less than a first specified rotation speed, the target engine rotation speed calculation portion predicts a down-shift speed change and calculates the target engine rotation speed on the basis of the rotation speed of the input shaft which is the rotation speed of the input shaft in a case where the speed change is executed to be the predicted speed stage, and

in a case where the clutch is not completely engaged and the rotation speed of the engine before the execution of the speed change is equal to or more than a second specified rotation speed, the target engine rotation speed calculation portion predicts an up-shift speed change and calculates the target engine rotation speed on the basis of the rotation speed of the input shaft which is the rotation speed of the input shaft in a case where the speed change is executed to be the predicted speed stage.

# FIG. 1

Control portion 10
- Speed change target engine torque calculation portion
- Maintaining torque calculation portion
- Engine control portion
- Target engine rotation speed calculation portion
- Return control engine torque calculation portion

FIG. 2

Clutch torque Tc
(Nm)

0

Clutch stroke Cl (mm)

# F I G. 3

FIG. 4

F I G. 5

FIG. 6

# F I G. 7

```
                              ( Clutch/engine cooperative control )
                                              │
                                              ▼  ┌─ S11
                                      ╱ Vehicle speed ╲   No
                                    ╱ equal to or more than ╲ ──→
                                      ╲ specified speed? ╱
                                              │ Yes
                                              ▼  ┌─ S12
                                      ╱ Intention of acceleration ╲  No
                                      ╲ present? ╱ ──→
                                              │ Yes
                                              ▼  ┌─ S13
                                      ╱ Clutch not completely ╲  No
                                      ╲ engaged? ╱ ──→
                                              │ Yes
                                              ▼  ┌─ S14
                              Yes   ╱ Before execution of speed ╲
                            ←────── ╲ change? ╱
          ┌─ S21                            │ No
   ┌─────────────────────┐                  ▼  ┌─ S31
   │ Torque-down control │         ┌─────────────────────────────┐
   └─────────────────────┘         │ Engine rotation speed control│
                                    └─────────────────────────────┘
                                              │
                                              ▼  ┌─ S32
                                      ╱ Clutch not ╲
                              No    ╱ completely disconnected ╲
                            ←────── ╲ and clutch difference rotation ╱
          ┌─ S22                      ╲ speed is 0? ╱
   ╱ Engine rotation ╲                        │ Yes  ┌─ S33
  ╱ speed equal to or less ╲           ┌─────────────────┐
 ╱ than first specified rotation ╲ Yes  │ Return control  │
 ╲ speed, or equal to or more ╱ ──→    └─────────────────┘
  ╲ than second specified ╱                   │
   ╲ rotation speed? ╱            No          ▼  ┌─ S34
              │ No              ╱ Return control completed? ╲
                                ╲ ╱
                                              │ Yes
                                  ┌─ S41       ▼
                          ┌─────────────────────────┐
                          │ Normal engine control    │
                          └─────────────────────────┘
```

# F I G. 8

```
┌─────────────────────────────────────┐
│        Torque-down control          │──── S21
└─────────────────────────────────────┘
                   │
                   ▼
┌─────────────────────────────────────┐
│      Detection of clutch stroke     │── S21-1
└─────────────────────────────────────┘
                   │
                   ▼
┌─────────────────────────────────────┐
│  Calculation process of maintaining torque │── S21-2
└─────────────────────────────────────┘
                   │
                   ▼
┌─────────────────────────────────────┐
│  Calculation of target engine torque Tet │── S21-3
└─────────────────────────────────────┘
                   │
                   ▼
┌─────────────────────────────────────┐
│ Engine is controlled to target engine torque Tet │── S21-4
└─────────────────────────────────────┘
                   │
                   ▼
┌─────────────────────────────────────┐
│                 End                 │
└─────────────────────────────────────┘
```

# F I G. 9

```
( Engine rotation speed control )～ S31
                │
┌──────────────────────────────────────────┐
│ Calculation process of maintaining torque Tk │～ S111
└──────────────────────────────────────────┘
                │
┌──────────────────────────────────────────┐
│ Detection of clutch stroke Cl │～ S112
└──────────────────────────────────────────┘
                │
┌──────────────────────────────────────────┐
│ Detection of accelerator opening degree Ac │～ S113
└──────────────────────────────────────────┘
                │
            S114
      ◇ Down-shift speed change? ◇────── No ────────────┐
                │                                        │
               Yes                                    S131
                │                          ◇ Clutch completely ◇── No ──┐
         S121                              ◇  disengaged?     ◇         │
   ◇ Engine rotation speed              Yes      │                     │
   ◇ Ner reached first target engine rotation ◇── Yes              S132  │
   ◇ speed Net1?                       ◇        │     ┌─────────────────────────┐
                │                               │     │ Calculation of third target │
               No    S122                       │     │ engine rotation speed Net3  │
   ┌─────────────────────────┐         │        │     └─────────────────────────┘
   │ Calculation of first target │     │        │              │
   │ rotation speed Net1      │        │        │              │
   └─────────────────────────┘         │    S133 │              │
        S123                           │     ┌─────────────────────────┐
   ┌─────────────────────────┐         │     │ Calculation of fourth target │
   │ Calculation of second target │    │     │ engine rotation speed Net4  │
   │ rotation speed Net2      │        │     └─────────────────────────┘
   └─────────────────────────┘         │              │
                │                       │              │
                ▼◄──────────────────────┘◄─────────────┘
┌──────────────────────────────────────────┐
│ Calculation of engine difference rotation speed │～ S141
│ Δe                                          │
└──────────────────────────────────────────┘
                │
┌──────────────────────────────────────────┐
│ Calculation of engine rotation speed │～ S142
│ adjustment torque Ten            │
└──────────────────────────────────────────┘
                │
┌──────────────────────────────────────────┐
│ Calculation of target engine torque Tet │～ S143
└──────────────────────────────────────────┘
                │
┌──────────────────────────────────────────┐
│ Engine is controlled to target engine torque │～ S144
│ Tet                                          │
└──────────────────────────────────────────┘
                │
         ( Return )
```

F I G. 10

Return control — S33

S33-1

Calculation of target engine torque Tet

S33-2

Calculation of deviation torque ΔT between target engine torque Tet and required engine torque Ter

S33-3

Calculation of return rate Rr per unit time

S33-4

Calculation of torque deviation rate Rt (n)

S33-5

Calculation of return control engine torque Tert

S33-6

Engine is controlled to return control engine torque Tert

Return

F I G. 11

```
                    ┌─────────────────────────────────────┐ ╶S21-2
                    │ Calculation process of maintaining   │ ╶S22-2
                    │              torque                   │ ╶S111
                    └─────────────────────────────────────┘
                                     │
                                     ▼
              ┌──────────────────────────────────────────┐
              │   Calculation of engine friction torque  │──S201
              │                 Tef                       │
              └──────────────────────────────────────────┘
                                     │
                                     ▼
              ┌──────────────────────────────────────────┐
              │  Calculation of auxiliary machine torque  │──S202
              │                 Ta                        │
              └──────────────────────────────────────────┘
                                     │
                                     ▼
              ┌──────────────────────────────────────────┐
              │  Calculation of adjustment torque T α     │──S203
              └──────────────────────────────────────────┘
                                     │
                                     ▼
              ┌──────────────────────────────────────────┐
              │  Calculation of maintaining torque Tk     │──S204
              └──────────────────────────────────────────┘
                                     │
                                     ▼
                    ┌─────────────────────────────────────┐
                    │              Return                  │
                    └─────────────────────────────────────┘
```

# F I G. 12

Compressor auxiliary machine torque calculation data

| Engine rotation speed (r.p.m.) | 700 | 1200 | 1700 | 2200 | 2700 |
|---|---|---|---|---|---|
| Compressor auxiliary machine torque (Nm) (Air condition OFF) | 5 | 7 | 9 | 10 | 11 |
| Compressor auxiliary machine torque (Nm) (Air condition ON) | 13 | 14 | 15 | 16 | 16 |

EP 2 980 386 A1

# F I G. 13

Calculation data of return rate per unit time

| Deviation torque $\Delta T$ (Nm) | 50 | 25 | 0 | −25 | −50 |
|---|---|---|---|---|---|
| Return rate Rr per unit time (%/s) (Decrease side) | −100 | −200 | −500 | − | − |
| Return rate Rr per unit time (%/s) (Increase side) | − | − | 500 | 200 | 100 |

EP 2 980 386 A1

# F I G. 14

Target engine deceleration calculation data

| Accelerator opening degree Ac | Target engine deceleration Det (r.p.m./s) | | | | |
|---|---|---|---|---|---|
| | First speed stage | Second speed stage | Third speed stage | Fourth speed stage | Fifth speed stage |
| 0% | -300 | -400 | -500 | -600 | -700 |
| 25% | -300 | -400 | -500 | -600 | -700 |
| 50% | -400 | -500 | -650 | -800 | -900 |
| 100% | -500 | -600 | -800 | -1000 | -1200 |

EP 2 980 386 A1

# F I G. 15

Engine rotation speed adjustment torque calculation data

| Target engine rotation speed Net−Current engine rotation speed Ne (r.p.m.) | 500 | 250 | 0 | −250 | −500 |
|---|---|---|---|---|---|
| Engine rotation speed adjustment torque Ten (N) | 25 | 10 | 0 | −10 | −25 |

EP 2 980 386 A1

# FIG. 16

Engine rotation speed Ner

Third target engine rotation speed Net3

Rotation speed

17

9

16 2 8

B

11

C 10

1

Idling rotation speed

13

Input shaft rotation speed Ni

Fourth target engine rotation speed Net4

Conventional engine rotation speed Ner

0

Time elapsed

Clutch torque Tc

Torque

3 4

6

14 15

7 12

Engine torque Te

Engine torque Te based on accelerator opening degree

0

5

T1 T2 T3 T4 T5

Time elapsed

Normal engine control | Torque-down control | Engine rotation speed control | Return control | Normal engine control

EP 2 980 386 A1

| INTERNATIONAL SEARCH REPORT | International application No. |
|---|---|
| | PCT/JP2014/056777 |

**A. CLASSIFICATION OF SUBJECT MATTER**
*F02D29/00*(2006.01)i, *F16D25/12*(2006.01)i, *F16H59/14*(2006.01)i, *F16H61/04*(2006.01)i, *F16H63/50*(2006.01)i

According to International Patent Classification (IPC) or to both national classification and IPC

**B. FIELDS SEARCHED**

Minimum documentation searched (classification system followed by classification symbols)
F02D29/00, F16D25/12, F16H59/14, F16H61/04, F16H63/50

Documentation searched other than minimum documentation to the extent that such documents are included in the fields searched
Jitsuyo Shinan Koho        1922–1996   Jitsuyo Shinan Toroku Koho   1996–2014
Kokai Jitsuyo Shinan Koho   1971–2014   Toroku Jitsuyo Shinan Koho   1994–2014

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2010-242716 A  (Toyota Motor Corp.),<br>28 October 2010 (28.10.2010),<br>paragraphs [0004], [0016] to [0021], [0029];<br>fig. 3<br>(Family: none) | 1-3,10-14<br>9<br>4-8,15-16 |
| Y | JP 2009-257127 A  (Toyota Motor Corp.),<br>05 November 2009 (05.11.2009),<br>paragraphs [0059], [0062]<br>(Family: none) | 9-14 |
| A | JP 2013-006456 A  (Toyota Motor Corp.),<br>10 January 2013 (10.01.2013),<br>paragraphs [0010], [0014]<br>(Family: none) | 4-8 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 April, 2014 (17.04.14) | 28 April, 2014 (28.04.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2014/056777

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2011-157997 A  (Aisin AW Co., Ltd.),<br>18 August 2011 (18.08.2011),<br>paragraph [0045]<br>(Family: none) | 16 |

Form PCT/ISA/210 (continuation of second sheet) (July 2009)

**REFERENCES CITED IN THE DESCRIPTION**

**Patent documents cited in the description**

- JP S58200052 A
- JP 491357 B
- JP 2008157184 A